(19) Europäisches Patentamt
European Patent Office
Office européen des brevets

(11) Veröffentlichungsnummer: **0 051 561**
**B1**

(12) # EUROPÄISCHE PATENTSCHRIFT

(45) Veröffentlichungstag der Patentschrift: **31.10.84**

(21) Anmeldenummer: **81810418.4**

(22) Anmeldetag: **19.10.81**

(51) Int. Cl.³: **C 08 G 14/06**, C 08 G 14/14, C 07 C 101/02, C 07 C 101/52, C 09 D 5/40, C 08 L 63/00

(54) **Harzartige Salze, deren Herstellung und deren Verwendung in Überzügen.**

(30) Priorität: **24.10.80 GB 8034886**
**18.06.81 GB 8118830**

(43) Veröffentlichungstag der Anmeldung: **12.05.82 Patentblatt 82/19**

(45) Bekanntmachung des Hinweises auf die Patenterteilung: **31.10.84 Patentblatt 84/44**

(84) Benannte Vertragsstaaten: **AT BE CH DE FR GB IT LI NL SE**

(56) Entgegenhaltungen:
**DE - A - 1 445 535**
**DE - A - 2 353 642**
**US - A - 2 717 263**
**US - A - 3 936 399**

(73) Patentinhaber: **CIBA-GEIGY AG, Postfach, CH-4002 Basel (CH)**

(72) Erfinder: **Demmer, Christopher George, Dr., 20 Wolsey Way, Cherry Hinton Cambridge CB1 3JQ (GB)**

**EP 0 051 561 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Vorliegende Erfindung betrifft neue, wasserlösliche oder in Wasser dispergierbare harzartige Carbonsäuresalze, diese enthaltende wäßrige Zusammensetzungen und mit solchen Zusammensetzungen überzogene Oberflächen.

Um einen korrosionsfesten Überzug auf Metallbehältern zu erzielen, die mit Nahrungsmitteln, Getränken oder korrodierenden Stoffen in Berührung kommen, ist es in der Praxis üblich, die Metalloberfläche mit einer vernetzbaren, in einem organischen Lösungsmittel gelösten Harzformulierung zu überziehen und dann den Überzug zu erhitzen, um das Lösungsmittel zu verdunsten und das Harz zu vernetzen. Die Vernetzung wandelt den Überzug in einen zähen, anhaftenden und biegsamen Schutzfilm um. Bei der Erhitzung verdunstet das Lösungsmittel üblicherweise in die Atmosphäre. Da organische Lösungsmittel verhältnismäßig teuer, feuergefährlich und meistens umweltfeindlich sind, besteht ein Bedarf für Überzüge, die mit geringsten Anteilen solcher Lösungsmittel aufgebracht werden können, wobei Überzugszusammensetzungen mit einem hohen Wasseranteil besonders nützlich sind. Ein weiteres wichtiges Erfordernis für solche Überzüge besteht darin, daß sie selbst nicht toxisch sind und kein toxisches oder geschmackverderbendes Material durch Auslaugen in das Nahrungsmittel oder das Getränk, mit dem sie für längere Zeit in Berührung stehen können, gelangen lassen. Die Verwendung gewisser wäßriger Systeme war bisher durch dieses letztere Erfordernis eingeschränkt.

Es wurde nun gefunden, daß sich stabile, wäßrige Überzugszusammensetzungen, die zu Überzügen mit ausgezeichneten mechanischen Eigenschaften und chemischer Beständigkeit härten und im allgemeinen kein toxisches oder geschmackverderbendes Material durch Auslaugung in Nahrungsmittel oder Getränke gelangen lassen, aus neuen harzartigen Carbonsäuresalzen herstellen lassen. Diese Salze erhält man aus einem Harz mit Phenolendgruppen durch eine Mannich-Reaktion mit einer Aminosäure und einem Aldehyd unter teilweiser oder vollständiger Neutralisation der durch die Aminosäure eingeführten Carbonsäuregruppe bzw. -gruppen. Sie lassen sich zusammen mit einem Aminoplast, einem Phenol/Formaldehydharz oder einem maskierten Polyisocyanat als wäßrige Oberflächenbezugszusammensetzungen verwenden. Unter Umständen ist der Zusatz einer solchen Mitreaktionskomponente jedoch nicht nötig.

Die Anwendung einer Mannich-Reaktion, um wasserlösliche Überzugszusammensetzungen zu erhalten, ist bereits bekannt.

Beispielsweise sind in den US-Patentschriften Nr. 4 188 312 und 4 189 450 Überzugszusammensetzungen beschrieben, die ein Reaktionsprodukt eines Epoxidharzes (d. h. einer Verbindung mit mehr als einer 1,2-Epoxidgruppe pro Durchschnittsmolekül) und einer Mannich-Base sowie beim ersten dieser Patente ein ungesättigtes Alkylphenol enthalten. Diese Mannich-Base ist das Reaktionsprodukt eines mehrwertigen mehrkernigen Phenols, eines sekundären Amins mit mindestens einer Hydroxyalklygruppe, wie einem N-Alkyläthanolamin oder N-Alkylisopropanolamin, Formaldehyd und beim zweiten dieser Patente einem Phenolgruppen enthaltenden Butadien- oder Isoprenhomo- oder -copolymeren.

In der britischen Patentschrift Nr. 1 428 835 wird ein durch Aminomethylierung eines p-Hydroxystyrolpolymeren unter Verwendung von Formaldehyd und einem sekundären Amin mit an das Stickstoffatom gebundenen Alkyl-, Alkenyl- oder aromatischen Gruppen, oder einem sekundären heterocyclischen Amin mit 4 bis 6 Ringkohlenstoffatomen hergestelltes kationisches Polymer beschrieben. Dieses Produkt kann man quartärisieren oder daraus ein Säureadditionssalz bilden.

Durch Umsetzung einer Mannich-Base mit einem Polyepoxid und nachfolgende Polyquartärisierung oder durch Umsetzung mit einer sowohl ein an einen Kohlenwasserstoffrest gebundenes Chlor-, Brom- oder Jodatom als auch mindestens eine Epoxidgruppe enthaltenden Verbindung hergestellte vernetzte makromolekulare Polyäther werden in den US-Patentschriften Nr. 4 000 116 und 4 014 955 beschrieben. Die Mannich-Basen werden aus einem monomeren Bisphenol hergestellt, und als Amine werden Dialkylamine oder Morpholin verwendet.

Die britische Patentschrift Nr. 1 457 932 beschreibt epoxidgruppenfreie Polymere, die in ihrer protonierten Form wasserlöslich sind und sich zur Verwendung in Überzügen eignen. Diese werden durch Umsetzung einer Mannich-Base mit Epoxidharz und nachfolgende Salzbildung hergestellt. Die eine oder mehrere, an jeden aromatischen Ring gebundene kationische Hydroxyalkylaminomethylgruppen enthaltende Mannich-Base stellt man durch Umsetzung eines Bisphenols, eines hydroxylgruppenhaltigen sekundären Amins, oder eines Gemischs aus einem solchen Amin mit einem anderen primären oder sekundären Amin, und Formaldehyd her. In dem Harz sind daher solche kationischen Gruppen an so viele von der Mannich-Base abgeleitete Reste in jedem Ring gebunden, als in der Molekülkette vorliegen.

In den in weiteren derartigen Patentschriften beschriebenen Verfahren werden polymere Bisphenole, die Reaktionsprodukte aus monomeren Bisphenolen und Epoxidharzen darstellen, mit Formaldehyd und einem Hydroxyalkylgruppen enthaltenden sekundären Amin umgesetzt, wobei polymere Mannichbasenybisphenole entstehen. Beispielsweise wird in dem in US-Patentschrift 3 994 989 beschriebenen Verfahren ein solches polymeres Bisphenol im Gemisch mit einem monomeren Bisphenol umgesetzt; bei dem in der britischen Patentschrift 1 563 917 beschriebenen Verfahren wird das polymere Bisphenol allein oder im Gemisch mit einem monomeren Bisphenol umgesetzt. In den polymeren

Mannichbasenbisphenolen sind kationische Hydroxyalkylaminomethylgruppen nur an einem aromatischen Ring jeweils am Ende der Kette gebunden. Diese polymeren Mannichbasenbisphenole werden jedoch nicht direkt in Überzugszusammensetzungen eingesetzt, sondern zur Bildung von Bisphenolen noch höheren Molekulargewichts durch Umsetzung mit Epoxidharzen weiter vorverlängert. Dabei würden die kationischen Gruppen nicht nur an den Enden der Molekülkette des Endprodukts an die endständigen aromatischen Ringe der von den polymeren Mannichbasenbisphenolen abgeleiteten Reste gebunden sein, sondern auch an allen Stellen, wo diese Reste in den übrigen Teilen der Kette vorkommen.

Die Verwendung einer aus einer Aminosäure hergestellten Mannichbase zur Bildung eines anionische Gruppen tragenden wasserlöslichen oder in Wasser dispergierbaren Produkts wird in keiner der obigen Patentschriften nahegelegt.

In der britischen Patentschrift Nr. 1 327 071 werden wäßrige kationische, elektrophoretisch abscheidbare Zusammensetzungen beschrieben, die das Reaktionsprodukt eines Polyepoxids und eines Amins enthalten, wobei letzterer Begriff Aminosäuren einschließen soll. Die Patentschrift enthält keinen Hinweis, daß man das Amin einer Mannich-Reaktion unterwerfen könnte, um das Polyepoxid löslich zu machen.

Phenolgruppenhaltige Harze mit carboxylsubstituierten Alkylaminomethylgruppen, die als Dispergiermittel für Proteine und als Klebstoffbestandteile verwendbar sein sollen, werden in der US-Patentschrift Nr. 2 717 263 beschrieben. Diese Dispergiermittel werden durch Kondensation eines Phenolharzes in der A-Stufe mit einer Aminosäure und Formaldehyd hergestellt. Es wird kein Hinweis darauf gegeben, ob diese Produkte sich als Überzugsharze eignen würden oder ob das Phenolharz durch das Reaktionsprodukt eines Phenols mit einem Polyepoxid ersetzt werden könnte.

Die US-Patentschrift Nr. 3 936 399 beschreibt chelatbildende Phenolharze, die durch eine Mannich-Reaktion von einem Phenol, Iminodiessigsäure und einem Aldehyd und Polykondensation des entstandenen Produkts mit einem Aldehyd hergestellt werden. Das polykondensierte Harz besitzt ein hochselektives Adsorptionsvermögen für Schwermetalle. Es liegt kein Hinweis vor, daß die durch die Mannich-Reaktion hergestellte Zwischenstufe irgendwie anderweitig verwendbar wäre.

Schließlich beschreibt die US-Patentschrift Nr. 3 563 926 ein Verfahren, bei dem ein harzartiges Epoxid mit einem Phenol oder Amin kondensiert und das Produkt mit einem Aldehyd zu einem »Präkondensat« umgesetzt wird. Das Präkondensat setzt man dann mit einer Polycarbonsäure um und macht es durch Zusatz einer Stickstoffbase wasserlöslich. Neben dem Einsatz von Phenolen und Aminen beschreibt die Patentschrift auch die Verwendung von Kondensaten eines Aldehyds mit einem Phenol oder Amin. Die Verwendung eines aus einem harzartigen Epoxid, einem Phenol, einem Amin und einem Aldehyd hergestellten Präkondensats ist jedoch nicht beschrieben, sodaß keine Möglichkeit für den Ablauf einer Mannich-Reaktion besteht.

Gegenstand der Erfindung sind nun wasserlösliche oder in Wasser dispergierbare Carbonsäuresalze der allgemeinen Formel

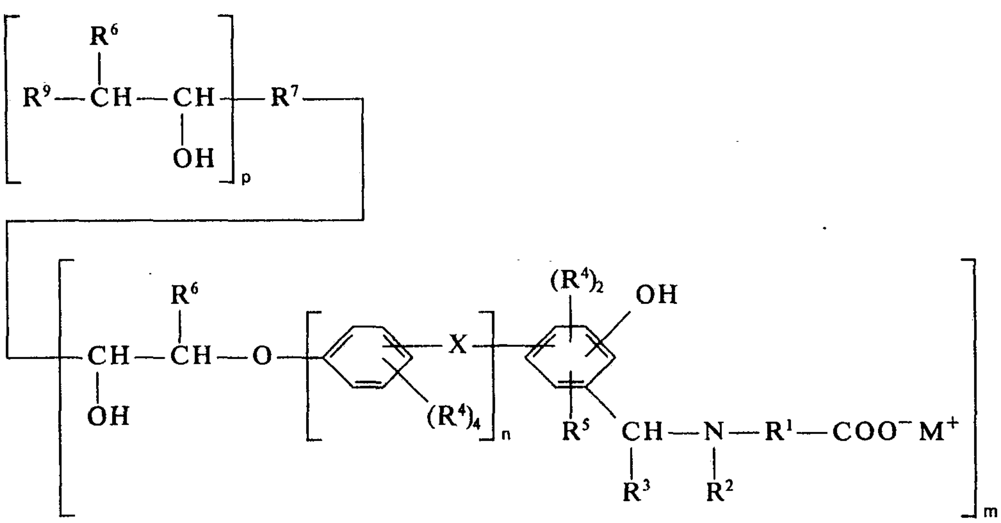

(I)

worin $R^1$ für eine aliphatische, aromatische oder araliphatische, gegebenenfalls eine weitere Gruppe $-COO^-M^+$ enthaltende zweiwertige Gruppe mit 1 bis 10 Kohlenstoffatomen und vorzugsweise für eine Alkylengruppe mit 1 bis 4 Kohlenstoffatomen oder eine Phenylengruppe steht, $R^2$ ein Wasserstoffatom oder eine Gruppe der Formel

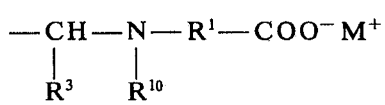

(II)

oder eine gegebenenfalls durch eine weitere Gruppe $-COO^-M^+$ oder eine Gruppe der Formel $-CH(R^3)OH$ oder $-CH(R^3)OR^8$ substituierte Alkylgruppe mit 1 bis 6 Kohlenstoffatomen darstellt, mit der Maßgabe, daß $R^1$ und $R^2$ zusammen nicht mehr als eine der Gruppe der Formel $-COO^-M^+$ enthalten, $R^3$ ein Wasserstoffatom oder eine Alkylgruppe mit 1 bis 4 Kohlenstoffatomen bedeutet, die $R^4$, die gleich oder verschieden sein können, jeweils für ein Wasserstoffatom, ein Halogenatom (wie ein Chlor- oder Bromatom), eine Alkylgruppe mit 1 bis 4 Kohlenstoffatomen oder eine Alkenylgruppe mit 2 bis 4 Kohlenstoffatomen stehen, $R^5$ in ortho- oder para-Stellung zur angegebenen phenolischen Hydroxylgruppe steht und ein Wasserstoffatom, ein Halogenatom wie ein Chlor- oder Bromatom), eine Alkylgruppe mit 1 bis 4 Kohlenstoffatomen, eine Alkenylgruppe mit 2 bis 4 Kohlenstoffatomen, eine Gruppe der Formel $-CH(R^3)OH$, eine Gruppe der Formel $-CH(R^3)OR^8$ oder eine Gruppe der Formel II ist, $R^6$ entweder ein Wasserstoffatom, wobei $R^7$ dann den Rest eines Polyepoxids, vorzugsweise mit einem mittleren Molekulargewicht von 1000 bis 5000, nach Wegnahme von $(m+p)$ 1,2-Epoxidgruppen darstellt, oder eine kovalente Bindung zur Gruppe $R^7$ bedeutet, wobei $R^7$ dann zusammen mit der angegebenen Hydroxyäthylengruppe einen gegebenenfalls durch aliphatische, cycloaliphatische und/oder heterocyclische Gruppen substituierten cycloaliphatischen Ring darstellt, $R^8$ für eine Alkylgruppe mit 1 bis 6 Kohlenstoffatomen oder eine Alkoxyalkylgruppe mit jeweils 1 bis 6 Kohlenstoffatomen in der Alkoxy- und Alkylgruppe steht, $R^9$ den Rest eines einwertigen Phenols, eines sekundären Monoamins oder einer Monocarbonsäure nach Wegnahme eines Wasserstoffatoms aus der phenolischen Hydroxylgruppe, der Carbonsäuregruppe bzw. der sekundären Aminogruppe darstellt, m 1, 2, 3 oder 4, n null oder 1 und p null oder 1 sind, derart daß $(m+p)$ mindestens 2 und höchstens 4, vorzugsweise 2, beträgt, X eine Alkylen- oder Alkylidengruppe mit 1 bis 3 Kohlenstoffatomen, eine Carbonyl- oder Sulfonylgruppe, ein Sauerstoff- oder Schwefelatom oder eine Valenzbindung bedeutet und $M^+$ für ein Wasserstoffion oder ein sich von einem Alkalimetall, Ammoniak oder einem Amin ableitendes einwertiges Kation, einschließlich quartärer Ammoniumkationen, steht, mit der Maßgabe, daß mindestens 25% der $M^+$-Ionen als solches einwertiges Kation vorliegen, wobei sich die angegebene phenolische Hydroxylgruppe in ortho- oder para-Stellung zur gezeigten Gruppe

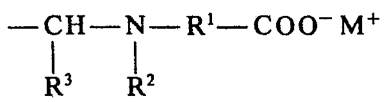

befindet und wobei $R^{10}$ ein Wasserstoffatom, eine Gruppe $-COO^-M^+$ oder eine gegebenenfalls durch eine weitere Gruppe $-COO^-M^+$ oder eine Gruppe der Formel $-CH(R^3)OH$ oder $-CH(R^3)OR^8$ substituierte Alkylgruppe mit 1 bis 6 Kohlenstoffatomen bedeutet.

Vorzugsweise entsprechen die Salze der Formel I ferner der Formel

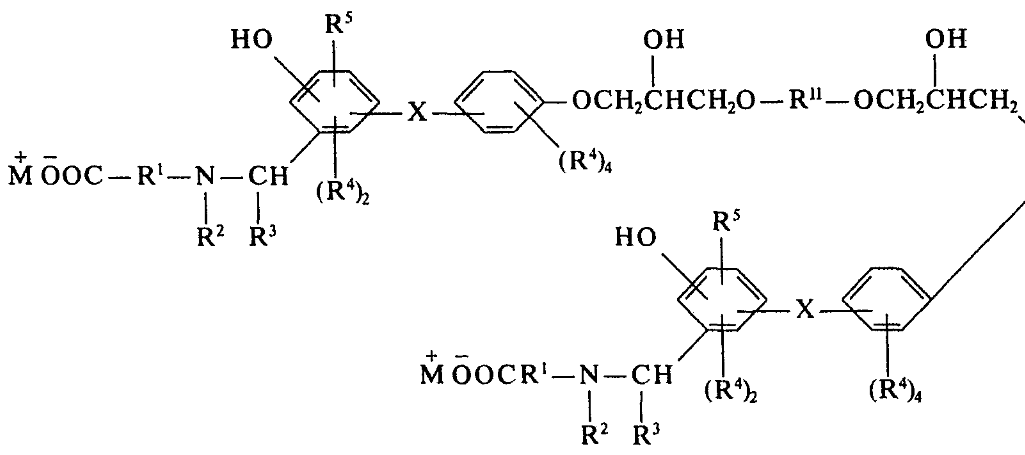

(III)

oder

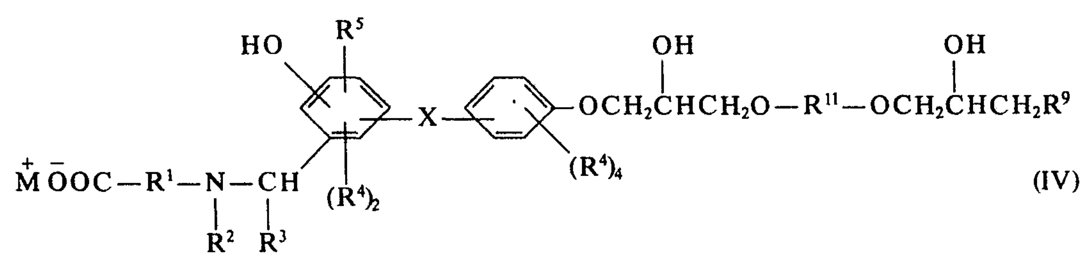

(IV)

worin $R^1$, $R^2$, $R^3$, $R^4$, $R^5$, $R^9$, X und $M^+$ die oben angegebenen Bedeutungen haben und $R^{11}$ für den Rest eines aliphatischen, cycloaliphatischen oder aromatischen Diglycidyläthers oder -esters nach Wegnahme der beiden Glycidylgruppen steht.

In den Verbindungen der Formel III oder der Formel IV entspricht $R^{11}$ selbst ferner vorzugsweise der Formel

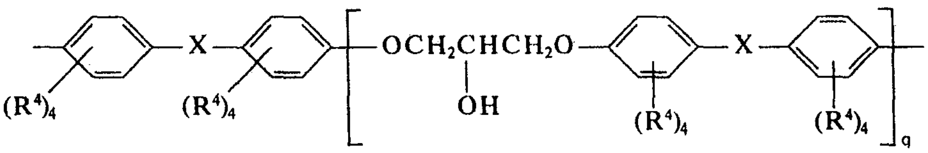 (V)

worin $R^4$ und X die oben angegebenen Bedeutungen haben und q null oder eine ganze Zahl von 1 bis 20, vorzugsweise von 2 bis 10, ist.

Salze der Formel I, III und IV, worin sich die angegebenen phenolischen Hydroxylgruppen in para-Stellung zur Gruppe X befinden, sind besonders bevorzugt, wie auch solche, in denen sowohl $R^3$ als auch $R^4$ für Wasserstoffatome stehen.

Die neuen Carbonsäuresalze der Formel I lassen sich aus den entsprechenden Harzen mit Phenolendgruppen der Formel

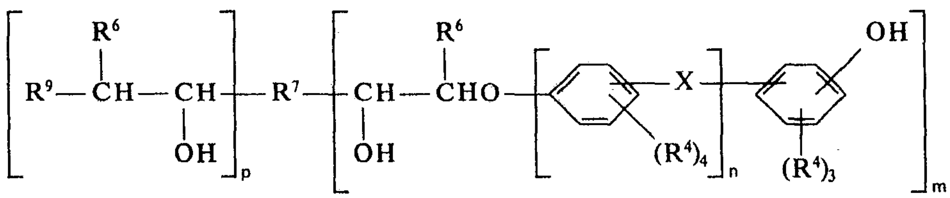 (VI)

worin $R^4$, $R^6$, $R^7$, X, m, n und p die oben angegebenen Bedeutungen haben, mit der Maßgabe, daß mindestens eines der beiden Kohlenstoffatome in ortho-Stellung bzw. das eine Kohlenstoffatom in para-Stellung zu dem die angegebene phenolische Hydroxylgruppe tragenden Kohlenstoffatom unsubstituiert ist, durch eine Mannich-Reaktion in Gegenwart einer Quelle für $M^+$-Ionen (wobei $M^+$ die oben angegebene Bedeutung hat) mit einem Aldehyd der Formel

$R^3CHO$ (VII)

worin $R^3$ die oben angegebene Bedeutung hat, und einer Aminosäure der Formel

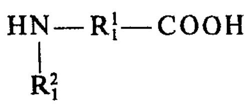 (VIII)

worin $R_1^1$ bzw. $R_1^2$ die oben für $R^1$ bzw. $R^2$ angegebenen Bedeutungen haben, jedoch einen Carbonsäuresubstituenten (—COOH) anstelle eines $-COO^-M^+$-Substituenten enthalten können, herstellen.

Vorzugsweise erfolgt diese Umsetzung dadurch, daß man die Reaktionspartner, üblicherweise in einem inerten Lösungsmittel, in Gegenwart einer zur mindestens teilweisen Neutralisation der Aminosäure ausreichenden Menge Base erhitzt. Die Reaktionstemperatur liegt normalerweise im Bereich von 60 bis 180°C, insbesondere 75 bis 130°C, und die Umsetzung ist üblicherweise nach 15 Minuten bis 4 Stunden beendet. Als inerte Lösungsmittel für die Umsetzung eignen sich unter anderem Kohlenwasserstoffe, Äther, Alkohole und Ester, worunter Toluol, Xylol, Tetrahydrofuran, Butanole, Essigester und insbesondere 2-Butoxyäthanol und 2-Äthoxyäthanol bevorzugt werden. Geeignete Basen für die mindestens teilweise Neutralisation sind unter anderem Natriumhydroxid, Natriumcarbonat, Kaliumhydroxyd, Kaliumcarbonat, Ammoniak, Triäthylamin und Triäthanolamin; 2-(Dimethylamino)-2-methyl-1-propanol und 2-(Dimethylamino)-äthanol sind besonders bevorzugt.

Im allgemeinen setzt man pro Mol phenolische Hydroxylgruppen im Harz der Formel VI 0,3 bis 2,0 Mol der Aminosäure der Formel VIII ein. Üblicherweise wendet man einen Überschuß des Aldehyds der Formel VII an, insbesondere 1,1 bis 4,0 Mol Aldehyd pro Mol Aminosäure der Formel VIII, da die Produkte bei Anwendung von überschüssigem Aldehyd eine höhere Lagerbeständigkeit bei Raumtemperatur aufweisen.

Solche Aldehyde der Formel VII werden bevorzugt, worin $R^3$ für eine Alkylgruppe oder ein Wasserstoffatom steht; Formaldehyd (der zweckmäßig an Ort und Stelle aus Paraformaldehyd gebildet wird) ist besonders bevorzugt. Als dabei verwendbare Aminosäuren der Formel VIII eignen sich unter anderem Sarkosin, Iminodiessigsäure, Anthranilsäure und insbesondere Glycin, Glutaminsäure, Asparaginsäure sowie p-Aminobenzoesäure.

Die als Ausgangsstoffe verwendeten Harze der Formel VI mit Phenolendgruppen werden selbst durch Umsetzung eines Polyepoxids, vorzugsweise eines Diepoxids, mit einem Überschuß eines mehrwertigen Phenols nach bekannten Methoden hergestellt. Diese Reaktion führt zu einer Vorverlängerung des Polyepoxids durch Umsetzung mit beiden Hydroxylgruppen des zweiwertigen Phenols. Dabei muß ebenso viel zweiwertiges Phenol, auf molarer Grundlage, wie Polyepoxid vorhanden sein, um ein Produkt mit mindestens einer phenolischen Endgruppe zu liefern. Das Molverhältnis Polyepoxid zu zweiwertigem Phenol liegt üblicherweise im Bereich von 1 : 1,02 bis 1 : 1,6 und insbesondere 1 : 1,1 bis 1 : 1,5. Die bevorzugte Methode zur Durchführung dieser Reaktion besteht darin, daß man die Reaktionspartner gegebenenfalls in Gegenwart eines interten Lösungsmittels sowie in Gegenwart einer Base, die ein tertiäres Amin sein kann, jedoch vorzugsweise ein Alkalihydroxyd ist, auf 100—200°C erhitzt.

Das zur Vorverlängerung verwendete zweiwertige Phenol kann einkernig sein, z. B. Hydrochinon, ist jedoch vorzugsweise ein Bisphenol, insbesondere ein solches der Formel

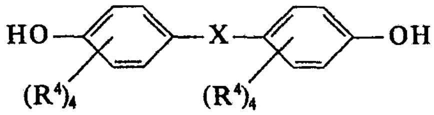

(IX)

worin X und $R^4$ die oben angegebenen Bedeutungen haben, wie Bis-(4-hydroxyphenyl)-methan (d. h. Bisphenol F) und 2,2-Bis-(4-hydroxyphenyl)-propan (d. h. Bisphenol A).

Die Polyepoxide, die zur Bildung des Ausgangsstoffs der Formel VI vorverlängert werden können, sind vorzugsweise solche mit zwei direkt an ein oder mehrere Sauerstoff-, Stickstoff- oder Schwefelatome gebundenen Endgruppen der Formel

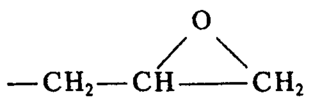

(X)

Als Beispiele solcher Harze seien Polyglycidylester genannt, die man durch Umsetzung einer zwei Carbonsäuregruppen pro Molekül enthaltenden Verbindung mit Epichlorhydrin oder Glycerindichlorhydrin in Gegenwart von Alkali erhalten kann. Solche Polyglycidylester können sich von aliphatischen Polycarbonsäuren, z. B. Oxalsäure, Bernsteinsäure, Glutarsäure, Adipinsäure, Pimelinsäure, Korksäure, Azelainsäure, Sebacinsäure oder dimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure, und von aromatischen Polycarbonsäuren wie Phthalsäure, Isophthalsäure und Terephthalsäure ableiten.

Weitere Beispiele sind Polyglycidyläther, die durch Umsetzung einer mindestens zwei freie alkoholische oder phenolische Hydroxylgruppen pro Molekül enthaltenden Verbindung mit Epichlorhydrin oder Glycerindichlorhydrin unter alkalischen Bedingungen, oder auch in Gegenwart eines sauren Katalysators mit nachfolgender Alkalibehandlung, erhältlich sind. Diese Äther lassen sich mit Poly(epichlorhydrin) aus acyclischen Alkoholen wie Äthylenglykol, Diäthylenglykol und höheren Poly(oxyäthylen)-glykolen, Propan-1,2-diol und Poly-(oxypropylen)-glykolen, Propan-1,3-diol, Butan-1,4-diol, Poly-(oxytetramethylen)-glykolen und Pentan-1,5-diol aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohex-3-en, und aus Alkoholen mit aromatischen Kernen wie N,N-Bis-(2-hydroxyäthyl)-anilin und p,p'-Bis-(2-hydroxyäthylamino)-diphenylmethan herstellen. Man kann sie ferner aus einkernigen Phenolen wie Resorcin und Hydrochinon und mehrkernigen Phenolen wie Bis-(4-hydroxyphenyl)-methan, 4,4'-Dihydroxydiphenyl, Bis-(4-hydroxyphenyl)-sulfon, 2,2-Bis-(4-hydroxyphenyl)-propan, 2,2-Bis-(3,5-dibrom-4-hydroxyphenyl)-propan (sonst als Tetrabrombisphenol A bekannt) und 2,2-Bis-(2-allyl-4-hydroxyphenyl)-propan herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin und Bis-(4-methylaminophenyl)-methan erhalten werden, sowie N,N'-Diglycidylderivate von cyclischen Alkylenharnstoffen wie Äthylenharnstoff und 1,3-Propylenharnstoff, und Hydantoinen wie 5,5-Dimethylhydantoin.

Poly-(S-glycidyl)-verbindungen sind zum Beispiel die Di-S-glycidylderivate von Dithiolen wie Äthan-1,2-dithiol und Bis-(4-mercaptomethylphenyl)-äther.

In Betracht kommen auch Polyepoxide, in welchen die 1,2-Epoxidgruppen an Heteroatome verschiedener Art gebunden sind, beispielsweise der Glycidyläther/Glycidylester der Salicylsäure, N-Glycidyl-N'-(2-glycidyloxypropyl)-5,5-dimethylhydantoin und 2-Glycidyloxy-1,3-bis-(5,5-dimethyl-1-glycidylhydantoin-3-yl)-propan.

Ebenfalls einsetzbar sind Polyepoxide mit mittelständigen Epoxidgruppen, wie Vinylcyclohexendioxyd, Limonendioxyd, Dicyclopentadiendioxyd, 4-Oxatetracyclo[6,2,1,$0^{2,7}$,$0^{3,5}$]undec-9-yl-glycidyläther, der Bis-(4-oxatetracyclo[6,2,1,$0^{2,7}$,$0^{3,5}$]undec-9-yl)-äther des Äthylenglykols, der 3,4-Epoxycyclohexylmethylester der 3',4'-Epoxycyclohexancarbonsäure sowie dessen 6,6'-Dimethylderivat, der Bis-(3,4-epoxycyclohexancarbonsäureester) des Äthylenglykols und 3-(3,4-Epoxycyclohexyl)-8,9-epoxy-2,4-dioxaspiro[5,5]undecan.

Gewünschtenfalls kann man auch ein Gemisch von Diepoxiden verwenden. Wenn erwünscht kann man auch Polyepoxide mit mehr als zwei Epoxidgruppen vorverlängern, doch ist es dem Fachmann in der Epoxidharztechnik bekannt, daß die Vorverlängerung solcher Harze schwieriger ist, da die Gefahr einer Gelierung besteht.

Die bevorzugten Diepoxide sind Diglycidyläther und Diglycidylester. Spezielle bevorzugte Diepoxide sind Diglycidyläther des 2,2-Bis-(4-hydroxyphenyl)-propans oder Bis-(4-hydroxyphenyl)-methans mit einem 1,2-Epoxidgehalt von mehr als 1,0 val/kg.

Das zweiwertige Phenol kann für sich oder gewünschtenfalls in Gegenwart einer Verbindung, die mit einer der Epoxidendgruppen des Polyepoxids reagiert, jedoch nicht weiter reagiert und somit eine weitere Kettenverlängerungsreaktion verhindert, eingesetzt werden. Als solche »Kettenabbrecher« eignen sich sekundäre Monoamine, Monocarbonsäuren und insbesondere einwertige Phenole, wobei p-tert.Butylphenol besonders bevorzugt wird. Bei Zugabe eines Kettenabbrechers muß dieser in einer solchen Menge vorliegen, daß mindestens eine Epoxidgruppe pro Durchschnittsmolekül des Polyepoxids zur Reaktion mit dem zweiwertigen Phenol frei bleibt.

Wie schon erwähnt kann man die erfindungsgemäßen Salze in Form von heißhärtbaren Zusammensetzungen zur Erzeugung von Oberflächenüberzügen verwenden.

Gegenstand der Erfindung sind daher weiterhin heißhärtbare Zusammensetzungen, die aus 100 Gewichtsteilen eines Salzes der Formel I, berechnet auf seinen Feststoffgehalt (wie weiter unten definiert), und 2 bis 200, vorzugsweise 25 bis 150 Gewichtsteilen, berechnet auf dessen Feststoffgehalt, eines Aminoplasts, eines Phenol/Formaldehydharzes oder eines maskierten Polyisocyanats bestehen, wobei das Aminoplast bzw. Phenol/Formaldehydharz mindestens 2 an ein Amidstickstoffatom oder -atome bzw. direkt an Kohlenstoffatome eines Phenolrings gebundene Gruppen der Formel

$$-CH_2OR^{12} \qquad (XI)$$

aufweist, worin $R^{12}$ für ein Wasserstoffatom oder eine Alkylgruppe mit 1 bis 6 Kohlenstoffatomen steht.

Derartige Zusammensetzungen in anwendungsfertiger Form enthalten üblicherweise auch Wasser und einen im Vergleich mit dem Wasservolumen geringen Anteil eines organischen Lösungsmittels, wie eines Äthers, Alkohols, Ketons oder Esters, insbesondere 2-Butoxyäthanol oder 2-Äthoxyäthanol. Methylolierte Verbindungen, die zur Bildung der Zusammensetzungen in Frage kommen, sind unter anderem Harnstoff/Formaldehydkondensate, Aminotriazin/Formaldehydkondensate, insbesondere Melamin/Formaldehyd- und Benzoguanamin/Formaldehydkondensate, sowie Phenol/Formaldehydkondensate. Gewünschtenfalls können diese veräthert sein, z. B. kann man die n-Butyläther einsetzen. Häufig sind die methylolierten Verbindungen und deren Äther nicht selbst wasserlöslich oder in Wasser dispergierbar. Die Einarbeitung einer Verbindung der Formel I fördert die Dispergierung oder Auflösung solcher Stoffe in Wasser, sodaß man stabile Lösungen oder Dispersionen der Gemische erhält.

Geeignete maskierte Polyisocyanate (d. h. solche, die bei Raumtemperatur in der wäßrigen Dispersion stabil sind, aber beim Erhitzen mit der Verbindung der Formel I reagieren) sind beispielsweise unter anderem mit Caprolactum, einem Oxim (z.B. Cyclohexanonoxim), einem einwertigen Phenol (z.B. Phenol selbst, p-Kresol, p-tert.Butylphenol) oder einem einwertigen aliphatischen, cycloaliphatischen oder araliphatischen Alkohol (z.B. Methanol, n-Butanol, Decanol, 1-Phenyläthanol, 2-Äthoxyäthanol und 2-n-Butoxyäthanol) maskierte Di- und Polyisocyanate. Geeignete Isocyanate sind unter anderem aromatische Diisocyanate wie m-Phenylen-, 1,4-Naphthylen-, 2,4- und 2,6-Toluylen- und 4,4'-Methylen-bis-(phenylen)-diisocyanate sowie deren Präpolymere mit Glykolen (z.B. Äthylen- und Propylenglykol), Glycerin, Trimethylolpropan, Pentaerythrit oder Diäthylenglykol sowie Alkylenoxydaddukten mit diesen aliphatischen zweiwertigen und mehrwertigen Alkoholen.

Die Zusammensetzungen lassen sich durch Erhitzen auf 100°C bis 275°C, vorzugsweise 150°C bis 225°C, für 30 Sekunden bis 1 Stunde, vorzugsweise 2 bis 30 Minuten, härten.

Weitere wasserlösliche oder in Wasser dispergierbare filmbildende Substanzen wie Alkydharze und Acrylharze können ebenfalls mitverwendet werden. Die Menge solcher Stoffe kann in weiten Grenzen schwanken, sollte jedoch nicht so groß sein, daß sie die vorteilhaften Eigenschaften der erfindungsgemäßen Zusammensetzungen überdeckt. Typischerweise kann man Zugaben bis zu 50%, und vorzugsweise nicht mehr als 30% verwenden, wobei sich diese Prozentsätze auf den Feststoffgehalt der Materialien beziehen.

Überall, wo er in dieser Patentschrift und den beigefügten Ansprüchen vorkommt, ist der Begriff »Feststoffgehalt« als der prozentuale Rückstand zu verstehen, der nach 3 Stunden langem Erhitzen einer 1 g Materialprobe in einer offenen Schale von 5 cm Durchmesser in einem Ofen bei 120°C bei Atmosphärendruck verbleibt.

Es wurde ferner gefunden, daß, wenn $R^5$ in der Formel I eine Gruppe der Formel $-CH(R^3)OH$ bedeutet, die Salze ohne Mitverwendung eines Aminoplasts, Phenol/Formaldehydharzes oder maskierten Polyisocyanats heißhärtbar sind.

Gegenstand dieser Erfindung ist dementsprechend weiterhin ein Verfahren zur Oberflächenbeschichtung, welches dadurch gekennzeichnet ist, daß man ein Salz der Formel I, worin $R^5$ eine Gruppe der Formel $-CH(R^3)OH$ bedeutet, auf die Oberfläche aufbringt und diese 30 Sekunden bis 1 Stunde, vorzugsweise 2 bis 30 Minuten, auf eine Temperatur im Bereich von 100°C bis 275°C, vorzugsweise 150°C bis 225°C, erhitzt.

Vorliegende Erfindung umfaßt ferner mit einer erfindungsgemäßen Zusammensetzung überzogene Oberflächen, sowohl im gehärteten als auch im ungehärteten Zustand. Dabei handelt es sich vorzugsweise um grundierte oder ungrundierte Metalloberflächen, insbesondere solche aus einem Eisenmetall, aber auch Holz- oder Kunststoffoberflächen.

Die Zusammensetzungen lassen sich durch Tauchen, Streichen, Walzen, Spritzen (einschließlich elektrostatischem Spritzen), elektrophoretische Abscheidung oder auf irgendeine andere herkömmliche Weise aufbringen. Gewünschtenfalls können sie auch Pigmente und Farbstoffe enthalten. Weitere gegebenenfalls darin enthaltene Stoffe sind unter anderem Streckmittel wie Calciumcarbonat, Calciumsulfat, Bariumsulfat und Magnesiumsilikat, Tenside, Verlaufmittel und Weichmacher. Vorzugsweise enthalten sie ferner eine starke Säure, z. B. eine aromatische Sulfonsäure oder deren Salz mit einem Amin oder Ammoniak, als Katalysator.

Diese Erfindung wird durch die nachfolgenden Beispiele erläutert, wobei alle Prozentangaben Gewichtsprozente sind.

Die in den Beispielen verwendeten Ausgangsstoffe werden wie folgt hergestellt:

### Phenol I

Man verrührt Epoxidharz I, einen flüssigen Glycidylpolyäther aus 2,2-Bis-(4-hydroxyphenyl)-propan (934 g; Epoxidgruppengehalt 5,35 val/kg), 2,2-Bis-(4-hydroxyphenyl)-propan (684 g) und wäßrige Natronlauge (1 g; 5%) und erhitzt unter Stickstoff auf 160°C. Das Molverhältnis Epoxidharz zu Bisphenol beträgt 1 : 1,2. Eine exotherme Reaktion setzt ein, und die Temperatur des Gemischs steigt spontan auf 208°C. Das Gemisch wird auf 180°C gekühlt und noch 3 Stunden bei dieser Temperatur gerührt, wobei man Phenol I, ein Harz mit phenolischen Hydroxylendgruppen und einem vernachlässigbaren Epoxidgruppengehalt (höchstens 0,02 val/kg) und einem mittleren Molekulargewicht von 2370, erhält.

### Phenol II

Man verrührt Epoxidharz I (855 g), 2,2-Bis-(4-hydroxyphenyl)-propan (645 g), p-tert.Butylphenol (90 g) und wäßrige Natronlauge (1,5 g; 5%) und erhitzt unter Stickstoff auf 180°C. Das Molverhältnis Epoxidharz aus Bisphenol zu einwertigem Phenol beträgt 1 : 1,24 : 0,4. Eine exotherme Reaktion setzt ein, und die Temperatur des Gemischs steigt spontan auf 207°C. Das Gemisch wird auf 180°C abgekühlt und bei dieser Temperatur $3\frac{1}{2}$ Stunden gerührt, wobei man Phenol II, ein Harz mit phenolischen Hydroxylendgruppen und einem vernachlässigbaren Epoxidgruppengehalt und einem mittleren Molekulargewicht von 1320, erhält.

### Phenol III

Dieses ist Phenol II ähnlich, weist aber ein mittleres Molekulargewicht von 2580 sowie einen vernachlässigbaren Epoxidgehalt (0,016 val/kg) auf. Es wird aus Epoxidharz I, dem Bisphenol und dem einwertigen Phenol in einem Molverhältnis von 1 : 1,5 : 0,04 hergestellt.

### Phenol IV

Dieses ist Phenol II ähnlich, wird jedoch aus dem Epoxidharz, dem Bisphenol und dem einwertigen Phenol in einem Molverhältnis von 1 : 1,22 : 0,08 hergestellt. Es weist ein mittleres Molekulargewicht von 1780 und einen vernachlässigbaren Epoxidgehalt auf.

### Phenol V

Dieses ist Phenol I ähnlich, wird jedoch aus dem Epoxidharz und dem Bisphenol in einem Molverhältnis von 1 : 1,25 hergestellt. Es weist ein mittleres Molekulargewicht von 2020 und einen vernachlässigbaren Epoxidgehalt auf.

### Phenol VI

Dieses ist Phenol I ähnlich, wird jedoch aus dem Epoxidharz und dem Bisphenol in einem Molverhältnis von 1 : 1,18 hergestellt. Es weist ein mittleres Molekulargewicht von 2520 und einen vernachlässigbaren Epoxidgehalt auf.

Phenol VII

Dieses ist Phenol II ähnlich, wird jedoch aus dem Epoxidharz, dem Bisphenol und dem einwertigen Phenol in einem Molverhältnis von 1 : 1,14 : 0,14 hergestellt. Sein mittleres Molekulargewicht beträgt 1880 und sein Epoxidgehalt ist vernachlässigbar.

Phenol VIII

Man verrührt den 3,4-Epoxycyclohexylmethylester der 3',4'-Epoxycyclohexancarbonsäure (200 g; Epoxidgruppengehalt 7,00 val/kg), 2,2-Bis-(4-hydroxyphenyl)-propan (199,5 g) und wäßriges Tetramethylammoniumchlorid (2,4 g; 50%) und erhitzt auf 120°C. Das Molverhältnis Epoxidharz zu Bisphenol beträgt 1 : 1,25. Eine exotherme Reaktion setzt ein und die Temperatur des Gemischs steigt spontan auf 132°C. Das Gemisch wird auf 120°C abgekühlt und noch 2 Stunden bei dieser Temperatur und danach 3 Stunden bei 160°C gerührt, wobei man Phenol VIII, ein Harz mit phenolischen Hydroxylendgruppen und mit einem vernachlässigbaren Epoxidgruppengehalt (0,08 val/kg) und einem mittleren Molekulargewicht von 1220, erhält.

Phenol IX

Man verrührt 1,3-Diglycidyl-5,5-dimethylhydantion (97,5 g; Epoxidgruppengehalt 7,70 val/kg), 2,2-Bis-(4-hydroxyphenyl)-propan (114 g) und wäßriges Tetramethylammoniumchlorid (1,3 g; 50%) und erhitzt auf 130°C. Das Molverhältnis Epoxidharz zu Bisphenol beträgt 1 : 1,33. Eine exotherme Reaktion setzt ein und die Temperatur des Gemischs steigt spontan auf 202°C. Das Gemisch wird auf 160°C abgekühlt und bei dieser Temperatur noch 2 Stunden gerührt, wobei man Phenol IX, ein Harz mit phenolischen Hydroxylendgruppen und einem vernachlässigbaren Epoxidgruppengehalt (höchstens 0,02 val/kg), erhält.

Phenol X

Man verrührt Epoxidharz I (114,3 g), Hydrochinon (44 g) und wäßriges Tetramethylammoniumchlorid (1 g; 50%) und erhitzt auf 130°C. Das Molverhältnis Epoxidharz I zu Hydrochinon beträgt 1 : 1,33. Eine exotherme Reaktion setzt ein und die Temperatur des Gemischs steigt spontan auf 190°C. Das Gemisch wird auf 160°C abgekühlt und $3\frac{1}{2}$ Stunden bei dieser Temperatur gerührt, wobei man Phenol X, ein Harz mit phenolischen Hydroxylendgruppen und einem vernachlässigbaren Epoxidgruppengehalt (höchstens 0,02 val/kg), erhält.

Phenol XI

Man verrührt Epoxidharz I (114,3 g), 2,2-Bis-(4-hydroxyphenyl)-methan (80,0 g) und wäßriges Tetramethylammoniumchlorid (1,2 g; 50%) und erhitzt auf 130°C. Das Molverhältnis Epoxidharz I zu Bisphenol beträgt 1 : 1,33. Eine exotherme Reaktion setzt ein und die Temperatur des Gemischs steigt spontan auf 185°C. Das Gemisch wird auf 160°C abgekühlt und 3 Stunden bei dieser Temperatur gerührt, wobei man Phenol XI, ein Harz mit phenolischen Hydroxylendgruppen und einem vernachlässigbaren Epoxidgruppengehalt, erhält.

Phenol XII

Man verrührt Epoxidharz I (152,4 g), 2,2-Bis-(3-allyl-4-hydroxyphenyl)-propan (184,8 g) und wäßriges Tetramethylammoniumchlorid (2 g; 50%) und erhitzt auf 120°C. Das Molverhältnis Epoxidharz I zu Bisphenol beträgt 1 : 1,5. Eine exotherme Reaktion setzt ein und die Temperatur des Gemischs steigt spontan auf 165°C. Das Gemisch wird auf 160°C abgekühlt und 3 Stunden bei dieser Temperatur gerührt, wobei man Phenol XII, ein Harz mit phenolischen Hydroxylendgruppen und einem vernachlässigbaren Epoxidgruppengehalt, erhält.

Aminoplast I

Dies ist ein voll methyliertes Harnstoff/Formaldehydharz mit praktisch 100% Feststoffgehalt.

### Aminoplast II

Dies ist ein methyliertes Hexamethylolnelaminharz mit 100% Feststoffgehalt, das durchschnittlich 4,0 Methoxymethylreste pro Aminotriazinkern enthält und eine Viskosität von 10 Pa s bei 25°C aufweist.

### Aminoplast III

Dies ist ein handelsübliches, butyliertes Harnstoff/Formaldehydharz mit 53% Feststoffgehalt.

### Aminoplast IV

Dies ist ein handelsübliches, butyliertes Benzoguanamin/Formaldehydharz mit 70% Feststoffgehalt.

### Phenoplast I

Dies ist ein aus Formaldehyd und 2,2-Bis-(4-hydroxyphenyl)-propan im Molverhältnis Bisphenol : Formaldehyd = 1 : 2,5 hergestelltes Resol, das in Wasser weder löslich noch dispergierbar ist. Sein Feststoffgehalt beträgt 80%.

### Phenoplast II

Dies ist ein handelsübliches, butyliertes Phenol/Formaldehydharz, das als Lösung (56% Feststoffgehalt) in eine geringe Menge Toluol enthaltendem n-Butanol geliefert wird. Es ist in Wasser weder löslich noch dispergierbar.

Freier Formaldehyd wird nach folgender Methode bestimmt:

Man wägt etwa 1,5 g Harz genau ein, gibt es in einen Erlenmeyerkolben, versetzt mit destilliertem Wasser (30 ml) und mischt den Inhalt gründlich durch. Man gibt Thymolphthaleinindikator (3 Tropfen) dazu und stellt das Gemisch, wenn nötig, mit n/10 Salzsäure oder Natronlauge neutral. Das Gemisch wird in Eis gekühlt und mit eiskalter Natriumsulfitlösung (25 ml, 12,5% Gew./Gew.) versetzt, kräftig geschüttelt und dann gegen n/10-Salzsäure bis zum Verschwinden der blauen Farbe titriert.

$$\text{Prozent freier Formaldehyd} = \frac{\text{Titer (ml)} \times \text{HCl Normalität} \times 3{,}001}{\text{Einwaage (g)}}.$$

### Beispiel 1

Man versetzt eine Lösung von Phenol I (50,7 g; 0,021 Mol) in 2-Butoxyäthanol (19,7 g) mit Sarkosin (4,6 g; 0,052 Mol) und 2-(Dimethylamino)-äthanol (4 g; 0,045 Mol) und erhitzt auf 80°C. Diese Lösung vermischt man mit einer Lösung von Paraformaldehyd (1,7 g; 91% Aktivgehalt, 0,052 Mol) in 2-Butoxyäthanol (10 g) und 2-(Dimethylamino)-äthanol (0,5 g; 0,005 Mol) und hält 1 Stunde bei 80°C.

Das Produkt entspricht im wesentlichen der Formel I, worin $R^1$ für $-CH_2-$, $R^2$ für $-CH_3-$, $R^3$, $R^4$ und $R^6$ für $-H$, etwa 25% der Gruppen $R^5$ für eine Gruppe der Formel II und der Rest für Wasserstoffatome stehen, $R^7$ einen aus Einheiten der Formel

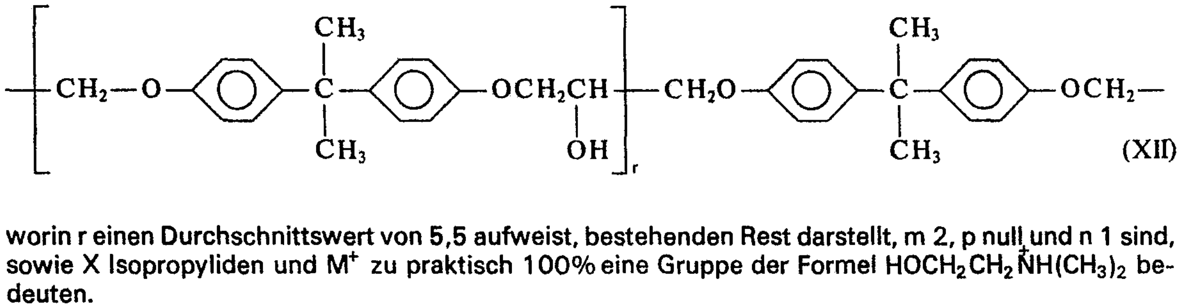

(XII)

worin r einen Durchschnittswert von 5,5 aufweist, bestehenden Rest darstellt, m 2, p null und n 1 sind, sowie X Isopropyliden und $M^+$ zu praktisch 100% eine Gruppe der Formel $HOCH_2CH_2\overset{+}{N}H(CH_3)_2$ bedeuten.

Man setzt destilliertes Wasser (170 g) dazu, wobei sich eine Lösung mit 25,7% Feststoffgehalt und einer Viskosität von 5,6 Pa s bei 25°C ergibt. Diese Lösung ist völlig wasserverdünnbar.

## Beispiel 2

Man vermischt eine Lösung von Phenol I (45,6 g; 0,019 Mol) in 2-Butoxyäthanol (18,4 g) mit 2-(Dimethylamino-)äthanol (3,6 g; 0,04 Mol). Man erhitzt unter Rühren auf 80°C und versetzt danach mit einer Lösung von 91%igem Paraformaldehyd (1,5 g; 0,046 Mol) in 2-Butoxyäthanol (10 g) und 2-(Dimethylamino)-äthanol (0,5 g; 0,005 Mol). Das Gemisch wird 30 Minuten bei 80°C gerührt. Nach dieser Zeit beträgt der gemessene freie Formaldehydgehalt des Reaktionsgemischs null. Man versetzt mit Sarkosin (4,1 g; 0,046 Mol) und 2-(Dimethylamino)-äthanol 0,5 g; 0,005 Mol). Nach weiteren $1\frac{1}{2}$ Stunden bei 80°C werden 96 g Wasser zugesetzt. Die entstandene Lösung weist einen Feststoffgehalt von 33,2% und eine Viskosität von 39,9 Pa s bei 25°C auf und ist völlig wasserverdünnbar. Das Produkt besitzt im wesentlichen dieselbe Zusammensetzung wie das aus Beispiel 1.

## Beispiel 3

Man vermischt eine Lösung von Phenol II (201 g; 0,152 Mol) in 2-Butoxyäthanol (67 g) mit Glycin (20 g; 0,27 Mol) und 2-(Dimethylamino)-äthanol (22 g; 0,25 Mol). Man erhitzt unter Rühren auf 80°C und versetzt mit einer Lösung von 9%igem Paraformaldehyd (17,6 g; 0,53 Mol) in 2-Butoxyäthanol (30 g) und 2-(Dimethylamino)-äthanol (3 g; 0,033 Mol). Die Temperatur des Gemischs steigt auf 85°C und wird dann 25 Minuten bei 80°C gehalten. Nach dieser Zeit beträgt der gemessene freie Formaldehydgehalt des Reaktionsgemischs null.

Das Produkt entspricht im wesentlichen der Formel I, worin $R^1$ für $-CH_2-$, $R^3$, $R^4$ und $R^6$ für $-H$, $R^2$ und $R^5$ entweder für ein Wasserstoffatom oder eine Gruppe der Formel $-CH_2OH$ stehen, $R^7$ einen aus Einheiten der Formel XII, worin r einen Durchschnittswert von 2,3 aufweist, bestehenden Rest darstellt. $(m+p) = 2$, $n = 1$, sowie $R^9$ p-tert.-Butylphenoxy, X Isopropyliden und $M^+$ zu 100% eine Gruppe der Formel $HOCH_2CH_2\overset{+}{N}H(CH_3)_2$ bedeuten.

Man setzt destilliertes Wasser (250 g) dazu, wobei sich eine Lösung mit 31,2% Feststoffgehalt und einer Viskosität von 50 Pa s bei 25°C ergibt. Diese Lösung ist völlig wasserverdünnbar.

## Beispiel 4

Man vermischt eine Lösung von Phenol III (52,8 g; 0,020 Mol) in 2-Butoxyäthanol (35,2 g) mit Sarkosin (2,8 g; 0,031 Mol) und 2-(Dimethylamino)-äthanol (1,7 g; 0,019 Mol). Man erhitzt unter Rühren auf 80°C und versetzt dann mit einer Lösung von 91%igem Paraformaldehyd (1 g; 0,030 Mol) in 2-Butoxyäthanol (15 g) und 2-(Dimethylamino)-äthanol (1,2 g; 0,013 Mol). Man rührt 3 Stunden bei 80°C und gibt destilliertes Wasser (90 g) dazu. Die entstandene Lösung weist 26,3% Feststoffgehalt und eine Viskosität von 2,2 Pa s bei 25°C auf und ist völlig wasserverdünnbar.

Das Produkt enthält im Durchschnitt etwa 75% eines Salzes der Formel I, worin $R^1$ für $-CH_2-$, $R^2$ für $-CH_3$ und $R^3$, $R^4$, $R^5$ und $R^6$ für $-H$ stehen, $R^7$ einen aus Einheiten der Formel XII, worin r einen Durchschnittswert von 6,2 aufweist, bestehenden Rest darstellt, $(m+p) = 2$, $n = 1$, sowie $R^9$ p-tert.Butylphenoxy, X Isopropyliden und $M^+$ zu 100% eine Gruppe der Formel $HOCH_2CH_2\overset{+}{N}H(CH_3)_2$ bedeuten.

## Beispiel 5

Man vermischt eine Lösung von Phenol IV (44,5 g; 0,025 Mol) in 2-Butoxyäthanol (29,7 g) mit Glycin (1,9 g; 0,025 Mol) und 2-(Dimethylamino)-äthanol (1,3 g; 0,015 Mol). Unter Rühren erhitzt man auf 80°C und versetzt mit einer Lösung von 91%igem Paraformaldehyd (1,8 g; 0,055 Mol) in 2-Butoxyäthanol (10 g) und 2-(Dimethylamino)-äthanol (2 g; 0,022 Mol). Man hält das Gemisch 2 Stunden bei 80°C und dann 30 Minuten bei 100°C.

Das Produkt enthält durchschnittlich etwa 50% eines Salzes der Formel I, worin $R^1$ für $-CH_2-$, $R^3$, $R^4$ und $R^6$ für $-H$ sowie $R^2$ und $R^5$ je für ein Wasserstoffatom oder eine Gruppe der Formel $-CH_2OH$ stehen, $R^7$ einen aus Einheiten der Formel XII, worin r einen Durchschnittswert von 3,7 aufweist, bestehenden Rest darstellt, $(m+p) = 2$, $n = 1$, sowie $R^9$ p-tert.Butylphenoxy, X Isopropyliden und $M^+$ zu 100% eine Gruppe der Formel $HOCH_2CH_2\overset{+}{N}(CH_3)_2$ bedeuten.

Man setzt destilliertes Wasser (100 g) dazu, wobei sich eine Lösung mit 22,7% Feststoffgehalt und einer Viskosität von 0,41 Pa s bei 25°C ergibt. Diese ist völlig wasserverdünnbar.

## Beispiel 6

Man vermischt eine Lösung von Phenol I (101,3 g; 0,043 Mol) in 2-Butoxyäthanol (39,4 g) mit Sarkosin (8,9 g; 0,1 Mol) und 2-(Dimethylamino)-äthanol (8,8 g; 0,099 Mol) und erhitzt auf 80°C. Diese Lösung vermischt man mit einer Lösung von 91%igem Paraformaldehyd (3,6 g; 0,11 Mol) in

2-Butoxyäthanol (10 g) und 2-(Dimethylamino)-äthanol (1,0 g; 0,01 Mol) und hält 1 Stunde bei 80°C. Dann versetzt man mit einer Lösung von 91%igem Paraformaldehyd (1,3 g; 0,4 Mol) in 2-Butoxyäthanol (5 g) und 2-(Dimethylamino)-äthanol (0,5 g; 0,006 Mol) und erhitzt noch 2 Stunden auf 80°C.

Das Produkt entspricht im wesentlichen der Formel I, worin $R^1$ für $-CH_2-$, $R^2$ für $-CH_3$, $R^3$, $R^4$ und $R^6$ je für $-H$ und etwa 17% von $R^5$ für eine Gruppe der Formel II und der Rest für Wasserstoffatome stehen, $R^7$ einen aus Einheiten der Formel XII, worin r einen Durchschnittswert von 5,5 aufweist, bestehenden Rest darstellt, m = 2, n = 1, p = null, sowie X Isopropyliden und $M^+$ zu 100% eine Gruppe der Formel $HOCH_2CH_2\overset{+}{N}H(CH_3)_2$ bedeuten.

Man setzt destilliertes Wasser (200 g) dazu, wobei sich eine breiige Lösung mit 35,9% Feststoffgehalt ergibt. Diese Lösung ist völlig wasserverdünnbar.

Beispiel 7

Man vermischt eine Lösung von Phenol I (50,7 g; 0,021 Mol) in 2-Butoxyäthanol (19,7 g) mit p-Aminobenzoesäure (6,9 g; 0,050 Mol) und 2-(Dimethylamino)-äthanol (4,0 g; 0,045 Mol) und erhitzt dann auf 120°C. Danach versetzt man mit einer Lösung von 91%igem Paraformaldehyd (1,7 g; 0,052 Mol) in 2-Butoxyäthanol (7 g) und 2-(Dimethylamino)-äthanol (0,5 g; 0,006 Mol) und hält noch eine Stunde bei 120°C.

Das Produkt entspricht im wesentlichen der Formel I, worin $R^1$ für p-Phenylen, $R^2$, $R^3$, $R^4$ und $R^6$ je für $-H$ und 19% von $R^5$ für eine Gruppe der Formel II und der Rest für ein Wasserstoffatom stehen, $R^7$ einen aus Einheiten der Formel XII, worin r einen Durchschnittswert von 5,5 aufweist, bestehenden Rest darstellt, m = 2, n = 1, sowie p null, X Isopropyliden und $M^+$ zu 100% eine Gruppe der Formel $HOCH_2CH_2\overset{+}{N}H(CH_3)_2$ bedeuten.

Nach Abkühlung des Gemischs auf 80°C versetzt man mit destilliertem Wasser (160 g), was eine breiige Lösung mit 25,4% Feststoffgehalt ergibt. Diese Lösung ist völlig wasserverdünnbar.

Beispiel 8

Man vermischt eine Lösung von Phenol V (100 g; 0,050 Mol) in 2-Butoxyäthanol (38,0 g) mit p-Aminobenzoesäure (13,7 g; 0,1 Mol) und 2-(Dimethylamino)-äthanol (8,5 g; 0,096 Mol) und erhitzt auf 120°C. Man versetzt mit einer Lösung von 91%igem Paraformaldehyd (5 g; 0,15 Mol) in 2-Butoxyäthanol (10,0 g) und 2-(Dimethylamino)-äthanol (1,0 g; 0,011 Mol) und hält noch 3½ Stunden bei 120°C.

Das Produkt entspricht im wesentlichen der Formel I, worin $R^1$ für p-Phenylen, $R^3$, $R^4$ und $R^6$ für $-H$ sowie $R^2$ und $R^5$ je für eine Gruppe der Formel $-CH_2OH$ oder ein Wasserstoffatom stehen, $R^7$ einen aus Einheiten der Formel XII, worin r einen Durchschnittswert von 5,3 aufweist, bestehenden Rest darstellt, m = 2, n = 1, sowie p null, X Isopropyliden und $M^+$ zu 100% eine Gruppe der Formel $HOCH_2CH_2\overset{+}{N}H(CH_3)_2$ bedeuten.

Man kühlt auf 80°C ab und gibt destilliertes Wasser (207 g) dazu. Die entstandene Lösung weist 35,8% Feststoffgehalt und eine Viskosität von 6,2 Pa s bei 25°C auf. Diese Lösung ist völlig wasserverdünnbar.

Beispiel 9

Man vermischt eine Lösung von Phenol VI (103,2 g; 0,041 Mol) in 2-Butoxyäthanol (68,8 g) mit p-Aminobenzoesäure (8,2 g; 0,060 Mol) und 2-(Dimethylamino)-äthanol (3,9 g; 0,044 Mol) und erhitzt auf 120°C. Man versetzt mit einer Lösung von 91%igem Paraformaldehyd (2 g; 0,061 Mol) in 2-Butoxyäthanol (15 g) und 2-(Dimethylamino)-äthanol (1,5 g; 0,017 Mol) und hält noch 6 Stunden bei 120°C.

Das Produkt enthält durchschnittlich etwa 75% eines Salzes der Formel I, worin $R^1$ für p-Phenylen und $R^2$, $R^3$, $R^4$, $R^5$ und $R^6$ je für $-H$ stehen, $R^7$ einen aus Einheiten der Formel XII, worin r einen Durchschnittswert von 5,6 aufweist, bestehenden Rest darstellt, m = 2, n = 1, sowie p null, X Isopropyliden und $M^+$ zu 100% eine Gruppe der Formel $HOCH_2CH_2\overset{+}{N}H(CH_3)_2$ bedeuten.

Nach Abkühlung versetzt man mit Wasser (175 g), was eine Lösung mit 28,9% Feststoffgehalt und einer Viskosität von 9,6 Pa s bei 25°C ergibt. Diese Lösung ist mit Wasser völlig verträglich.

Beispiel 10

Man vermischt eine Lösung von Phenol VI (126 g; 0,050 Mol) in 2-Butoxyäthanol (84,0 g) mit Iminodiessigsäure (6,7 g; 0,050 Mol) und 2-(Dimethylamino)-äthanol (6,9 g; 0,078 Mol) und erhitzt auf 80°C. Man versetzt mit einer Lösung von 91%igem Paraformaldehyd (1,8 g; 0,055 Mol) in 2-Butoxyäthanol (10 g) und 2-(Dimethylamino)-äthanol (2 g; 0,022 Mol). Man hält 1½ Stunden bei 80°C und versetzt danach mit destilliertem Wasser (215 g), was eine Lösung mit 27,6 % Feststoffgehalt und einer Viskosität von 39,9 Pa s bei 25°C ergibt.

Das Produkt enthält etwa 50% des Salzes der Formel I, worin $R^1$ für $-CH_2-$, $R^2$ für $-CH_2COO^- M^+$ und $R^3$, $R^4$, $R^5$ und $R^6$ für $-H$ stehen, $R^7$ einen aus Einheiten der Formel XII, worin r einen Durchschnittswert von 5,6 aufweist, bestehenden Rest darstellt, m = 2, n = 1, sowie p null, X Isopropyliden und $M^+$ zu 100% eine Gruppe der Formel $HOCH_2CH_2\overset{+}{N}H(CH_3)_2$ bedeuten.

Diese Lösung ist mit Wasser völlig verträglich.

## Beispiel 11

Man vermischt eine Lösung von Phenol I (50,7 g; 0,021 Mol) in 2-Butoxyäthanol (19,7 g) mit Iminodiessigsäure (5,0 g; 0,038 Mol) und 2-(Dimethylamino)-äthanol (6,0 g; 0,067 Mol) und erhitzt auf 120°C. Man versetzt mit einer Lösung von 91%igem Paraformaldehyd (1,8 g; 0,055 Mol) in 2-Butoxyäthanol (5 g) und 2-(Dimethylamino)-äthanol (1 g; 0,011 Mol) und rührt das Gemisch noch 15 Minuten bei 120°C. Das Gemisch wird abgekühlt und mit destilliertem Wasser (100 g) versetzt.

Das Produkt entspricht im wesentlichen der Formel I, worin $R^1$ für $-CH_2-$, $R^2$ für $-CH_2COO^- M^+$, $R^3$, $R^4$ und $R^6$ je für $-H$, die Hälfte der Symbole $R^5$ für $-CH_2OH$ und der Rest für ein Wasserstoffatom stehen, $R^7$ einen aus Einheiten der Formel XII, worin r einen Durchschnittswert von 5,5 aufweist, bestehenden Rest darstellt, m = 2, n = 1, sowie p null, X Isopropyliden und $M^+$ zu 100% eine Gruppe der Formel $HOCH_2CH_2\overset{+}{N}(CH_3)_2$ bedeuten.

Die entstandene Lösung weist 34,2% Feststoffgehalt und eine Viskosität von 140 mPa s bei 25°C auf. Sie ist völlig wasserverdünnbar.

## Beispiel 12

Man vermischt eine Lösung von Phenol II (52,1 g; 0,040 Mol) in 2-Butoxyäthanol (13,1 g) mit Anthranilsäure (18,3 g; 0,13 Mol) und 2-(Dimethylamino)-äthanol (11,0 g; 0,124 Mol). Man erhitzt auf 80°C und vermischt dann mit einer Lösung von 91%igem Paraformaldehyd (8,8 g; 0,27 Mol) in 2-(Dimethylamino)-äthanol (2,0 g; 0,022 Mol) und 2-Butoxyäthanol (15 g). Man hält 30 Minuten bei 80°C und versetzt danach mit destilliertem Wasser (139 g), was eine Lösung mit 32,9% Feststoffgehalt ergibt.

Das Produkt entspricht im wesentlichen der Formel I, worin $R^1$ für o-Phenylen, $R^2$, $R^3$, $R^4$ und $R^6$ je für $-H$, etwa 63% von $R^5$ für eine Gruppe der Formel II und der Rest für $-CH_2OH$ stehen, $R^7$ einen aus Einheiten der Formel XII, worin r einen Durchschnittswert von 2,3 aufweist, bestehenden Rest darstellt, (m + p) = 2, n = 1, sowie X Isopropyliden, $R^9$ p-tert.Butylphenoxy und $M^+$ zu 100% eine Gruppe der Formel $HOCH_2CH_2\overset{+}{N}H(CH_3)_2$ bedeuten.

Diese Lösung ist völlig wasserverdünnbar.

## Beispiel 13

Man vermischt eine Lösung von Phenol II (50 g; 0,038 Mol) in 2-Butoxyäthanol (17 g) mit Sarkosin (5,9 g; 0,066 Mol) 2-(Dimethylamino)-äthanol (6 g; 0,067 Mol), 91%igem Paraformaldehyd (4,4 g; 0,133 Mol) und noch mehr 2-Butoxyäthanol (10 g). Man rührt das Gemisch 30 Minuten bei 100°C und versetzt mit destilliertem Wasser (100 g). Die entstandene Lösung weist 32% Feststoffgehalt und eine Viskosität von 39,2 Pa s bei 25°C auf und ist völlig wasserverdünnbar.

Das Produkt entspricht im wesentlichen der Formel I, worin $R^1$ für $-CH_2-$, $R^2$ für $-CH_3$, $R^3$, $R^4$ und $R^6$ je für $-H$ und $R^5$ für eine Gruppe der Formel $-CH_2OH$ stehen, $R^7$ einen aus Einheiten der Formel XII, worin r einen Durchschnittswert von 2,3 aufweist, bestehenden Rest darstellt, (m + p) = 2, n = 1, sowie X Isopropyliden, $R^9$ p-tert.Butylphenoxy und $M^+$ zu 100% eine Gruppe der Formel $HOCH_2CH_2\overset{+}{N}H(CH_3)_2$ bedeuten.

## Beispiel 14

Man vermischt eine Lösung von Phenol II (50 g; 0,038 Mol) in 2-Butoxyäthanol (17 g) mit Glutaminosäure (3,7 g; 0,025 Mol) und 2-(Dimethylamino)-äthanol (4,2 g; 0,047 Mol). Das Gemisch wird gerührt und auf 80°C erhitzt und dann mit einer Lösung von 91%igem Paraformaldehyd (1,7 g; 0,051 Mol) in 2-Äthoxyäthanol (10 g) und 2-(Dimethylamino)-äthanol (0,5 g; 0,006 Mol) versetzt und 30 Minuten bei 80°C gehalten. Man setzt so viel destilliertes Wasser zu, daß sich eine Lösung mit 35,6% Feststoffgehalt ergibt. Diese Lösung ist völlig wasserverdünnbar.

Das Produkt enthält durchschnittlich etwa 58% eines Salzes der Formel I, worin $R^1$ für

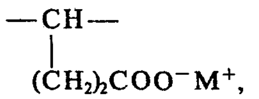

$R^3$, $R^4$ und $R^6$ für $-H$ sowie $R^2$ und $R^5$ je für ein Wasserstoffatom oder eine Gruppe der Formel $-CH_2OH$ stehen, $R^7$ einen aus Einheiten der Formel XII, worin r einen Durchschnittswert von 2,3 aufweist, bestehenden Rest darstellt, (m + p) = 2, n = 1, sowie X Isopropyliden, $R^9$ p-tert.Butylphenoxy und $M^+$ zu 100% eine Gruppe der Formel $HOCH_2CH_2\overset{+}{N}H(CH_3)_2$ bedeuten.

Beispiel 15

Man vermischt Phenol VII (2000 g; 1,06 Mol) mit 2-Butoxyäthanol (1354 g) und erhitzt auf 125 °C. Nach vollständiger Auflösung des Phenols gibt man Asparaginsäure (133,1 g; 1 Mol) und eine 80%ige wäßrige Lösung von 2-Dimethylamino-2-methyl-1-propanol (138,1 g; 0,944 Mol) dazu. Man hält das Gemisch 30 Minuten bei 120 °C und kühlt danach auf 80 °C ab. Danach versetzt man mit einer Lösung von 91%igem Paraformaldehyd (99,1 g; 3 Mol) in 2-Butoxyäthanol (238,1 g) und einer 80%igen wäßrigen Lösung von 2-Dimethylamino-2-methyl-1-propanol (9,9 g; 0,068 Mol). Dieses Gemisch wird 3 Stunden bei 80 °C gerührt, wonach der gemessene freie Formaldehyd im Gemisch null ist. Das Produkt weist 56% Feststoffgehalt und eine Viskosität von 81,0 Pa s bei 25 °C auf und ist völlig wasserverdünnbar.

Das Produkt enthält durchschnittlich etwa 50% eines Salzes der Formel I, worin $R^1$ für

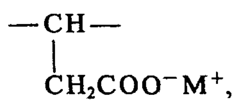

$R^3$, $R^4$ und $R^6$ für $-H$ sowie $R^2$ und $R^5$ je für ein Wasserstoffatom oder eine Gruppe der Formel $-CH_2OH$ stehen, $R^7$ einen aus Einheiten der Formel XII, worin r einen Durchschnittswert von 4,0 aufweist, bestehenden Rest darstellt, (m + p) = 2, n = 1, sowie $R^9$ p-tert.Butylphenoxy, X Isopropyliden und $M^+$ zu 50% eine Gruppe der Formel $HOCH_2C(CH_3)_2\overset{+}{N}H(CH_3)_2$ und im übrigen $H^+$ bedeuten.

Beispiel 16

Man verfährt wie in Beispiel 15, doch mit einem kleineren Anteil Asparaginsäure. So vermischt man Phenol VII (300 g; 0,160 Mol) mit 2-Butoxyäthanol (207,8 g), Asparaginsäure (10 g; 0,075 Mol) und 10,4 g (0,07 Mol) der 80%igen wäßrigen Lösung von 2-Dimethylamino-2-methyl-1-propanol. Dann versetzt man mit einer Lösung von 91%igem Paraformaldehyd (7,5 g; 0,23 Mol) in 2-Butoxyäthanol (29,3 g) und einer 80%igen wäßrigen Lösung von 2-Dimethylamino-2-methyl-1-propanol (0,75 g; 0,005 Mol). Die entstandene Lösung ist völlig wasserverdünnbar und weist eine Viskosität von 59,0 Pa s bei 25°C auf.

Das Produkt enthält durchschnittlich etwa 23% eines Salzes der Formel I, worin $R^1$ für

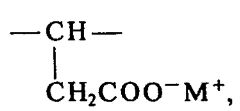

$R^3$, $R^4$ und $R^6$ für $-H$ sowie $R^2$ und $R^5$ für ein Wasserstoffatom oder eine Gruppe der Formel $-CH_2OH$ stehen, $R^7$ einen aus Einheiten der Formel XII, worin r einen Durchschnittswert von 4,0 aufweist, bestehenden Rest darstellt, (m + p) = 2, n = 1, sowie $R^9$ p-tert.Butylphenoxy, X Isopropyliden und $M^+$ zu 100% eine Gruppe der Formel $HOCH_2C(CH_3)_2\overset{+}{N}H(CH_3)_2$ bedeuten.

Beispiel 17

Man vermischt eine Lösung von Phenol V (50 g; 0,025 Mol) in 2-Butoxyäthanol (19 g) mit Glycin (7,5 g; 0,1 Mol) und 2-(Dimethylamino)-äthanol (8,5 g; 0,096 Mol). Das Gemisch wird gerührt und auf 80°C erhitzt und dann mit einer Lösung von 91%igem Paraformaldehyd (9,9 g; 0,3 Mol) in 2-Äthoxyäthanol (20 g) und 2-(Dimethylamino)-äthanol (1 g; 0,01 Mol) versetzt und 1½ Stunden bei 80°C gehalten. Nach dieser Zeit beträgt der gemessene freie Formaldehydgehalt des Gemischs 2,6%. Man gibt 2-Butoxyäthanol (20 g) dazu. Die entstandene Lösung weist eine Viskosität von 22,4 Pa s bei 25°C und 55,5% Feststoffgehalt auf und ist völlig wasserverdünnbar.

Das Produkt entspricht im wesentlichen der Formel I, worin $R^1$ für $-CH_2-$, $R^2$ für $-CH_2OH$, $R^3$, $R^4$ und $R^6$ für $-H$ und $R^5$ für

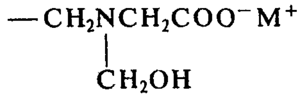

stehen, $R^7$ einen aus Einheiten der Formel XII, worin r einen Durchschnittswert von 5,3 aufweist, bestehenden Rest darstellt, m = 2, n = 1, sowie p null, X Isopropyliden und $M^+$ zu 100% eine Gruppe der Formel $HOCH_2CH_2\overset{+}{N}H(CH_3)_2$ bedeuten.

## Beispiel 18

Man vermischt Phenol VIII (50 g; 0,041 Mol) mit 2-Butoxyäthanol (40 g) und erhitzt auf 120°C. Nach völliger Auflösung des Phenols gibt man Asparaginsäure (6,6 g; 0,050 Mol) dazu und hält noch 30 Minuten bei 120°C. Nach Abkühlung des Gemischs auf 80°C versetzt man mit 91%igem Paraformaldehyd (5 g; 0,15 Mol) und einer 80%igen wäßrigen Lösung von 2-Dimethylamino-2-methyl-1-propanol (14,8 g; 0,1 Mol). Dieses Gemisch rührt man 5 Stunden bei 80°C, wonach der gemessene freie Formaldehydgehalt auf 0,15% gefallen ist. Das Produkt weist 53% Feststoffgehalt auf und ist völlig wasserverdünnbar.

Das Produkt enthält etwa 50% des Salzes der Formel I, worin $R^1$ für

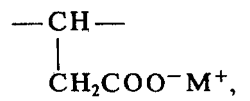

$R^3$ und $R^4$ für $-H$, $R^2$ und $R^5$ je für ein Wasserstoffatom oder eine Gruppe der Formel $CH_2OH$ stehen, $R^6$ eine kovalente Bindung zu $R^7$ bedeutet, welches zusammen mit der angegebenen Hydroxyäthylengruppe ein cycloaliphatisches Ringsystem darstellt, m 2, p null und n 1 sind sowie X Isopropyliden und $M^+$ zu 100% eine Gruppe der Formel $HOCH_2C(CH_3)_2NH^+(CH_3)_2$ bedeuten.

## Beispiel 19

Man vermischt Phenol IX (50 g) mit 2-Butoxyäthanol (40 g) und erhitzt auf 120°C. Nach völliger Auflösung des Phenols gibt man Asparaginsäure (6,6 g; 0,050 Mol) dazu und hält noch 30 Minuten bei 100°C. Nach Abkühlung des Gemischs auf 80°C versetzt man mit 91%igem Paraformaldehyd (5 g; 0,15 Mol) und einer 80%igen wäßrigen Lösung von 2-Dimethylamino-2-methyl-1-propanol (14,8 g; 0,1 Mol). Dieses Gemisch wird 2 Stunden bei 80°C gerührt, wonach der gemessene freie Formaldehydgehalt auf 1,5% gefallen ist. Das Produkt weist 53% Feststoffgehalt auf und ist völlig wasserverdünnbar. Es entspricht im wesentlichen der Formel I, worin $R^1$ für

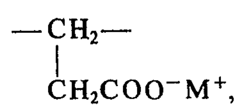

$R^2$, $R^3$, $R^4$, $R^5$ und $R^6$ je für $-H$ stehen, $R^7$ einen Rest darstellt, der $-CH_2CH(OH)CH_2$-Gruppen, Einheiten der Formel

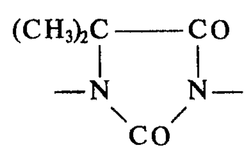

(XIII)

und 2,2-Bis-(4-oxyphenyl)-propangruppen enthält, n = 1, m = 2, p = null, sowie X Isopropyliden und $M^+$ zu 100% eine Gruppe der Formel $HOCH_2C(CH_3)_2\ N^+H(CH_3)_2$ bedeuten.

## Beispiel 20

Man vermischt Phenol X (50 g) mit 2-Butoxyäthanol (40 g) und erhitzt auf 120°C. Nach völliger Auflösung des Phenols gibt man Asparaginsäure (6,6 g; 0,05 Mol) dazu und hält noch 30 Minuten auf 100°C. Nach Abkühlung des Gemischs auf 80°C versetzt man mit 91%igem Paraformaldehyd

(5 g; 0,15 Mol) und einer 80%igen wäßrigen Lösung von 2-Dimethylamino-2-methyl-1-propanol (14,8 g; 0,1 Mol). Dieses Gemisch wird 2 Stunden bei 80°C gerührt, wonach der freie Formaldehydgehalt auf 0,9% gefallen ist. Das Produkt weist 53% Feststoffgehalt auf und ist völlig wasserverdünnbar. Es entspricht im wesentlichen der Formel I, worin $R^1$ für die Formel

$$\begin{array}{l} -CH- \\ \quad | \\ \quad CH_2COO^-M^+, \end{array}$$

$R^2$, $R^3$, $R^4$, $R^5$ und $R^6$ je für $-H$ stehen, m = 2, n = p = null, $R^7$ einen Rest darstellt, der 2,2-Bis-(4-oxyphenyl)-propangruppen, $-CH_2CH(OH)CH_2$-Gruppen und p-Phenylendioxygruppen enthält, und $M^+$ zu 100% eine Gruppe der Formel $HOCH_2C(CH_3)_2\overset{+}{N}H(CH_3)_2$ bedeuten.

## Beispiel 21

Man vermischt Phenol XI (50 g) mit 2-Butoxyäthanol (40 g) und erhitzt auf 100°C. Nach völliger Auflösung des Phenols gibt man Asparaginsäure (6,6 g; 0,050 Mol) dazu und hält noch 30 Minuten bei 100°C. Nach Abkühlung des Gemischs auf 80°C versetzt man mit 91%igem Paraformaldehyd (5 g; 0,15 Mol) und einer 80%igen wäßrigen Lösung von 2-Dimethylamino-2-methyl-1-propanol (14,8 g; 0,1 Mol). Dieses Gemisch wird 3 Stunden bei 80°C gerührt, wonach der gemessene freie Formaldehydgehalt 1,5% beträgt. Das Produkt weist 53% Feststoffgehalt auf und ist völlig wasserverdünnbar. Es entspricht im wesentlichen der Formel I, worin $R^1$ für

$$\begin{array}{l} -CH- \\ \quad | \\ \quad CH_2COO^-M^+ \end{array}$$

und $R^2$, $R^3$, $R^4$, $R^5$ und $R^6$ je für $-H$ stehen, m = 2, n = 1, p = null, $R^7$ einen Rest darstellt, der 2,2-Bis-(4-oxyphenyl)-propangruppen, $-CH_2CH(OH)CH_2$-Gruppen und Bis-(4-oxyphenyl)-methangruppen enthält, sowie X $-CH_2-$ und $M^+$ zu 100% eine Gruppe der $HOCH_2C(CH_3)_2\overset{+}{N}H(CH_3)_2$ bedeuten.

## Beispiel 22

Man vermischt Phenol XII (40 g) mit 2-Butoxyäthanol (40 g) und erhitzt auf 100°C. Nach völliger Auflösung des Phenols gibt man Asparaginsäure (5,3 g; 0,040 Mol) dazu und hält noch 30 Minuten bei 100°C. Nach Abkühlung des Gemischs auf 80°C versetzt man mit 91%igem Paraformaldehyd (4 g; 0,12 Mol) und einer 80%igen wäßrigen Lösung von 2-Dimethylamino-2-methyl-1-propanol (14,8 g; 0,1 Mol). Dieses Gemisch wird 1½ Stunden bei 80°C gerührt, wonach der gemessene freie Formaldehydgehalt auf 0,44% gefallen ist. Das Produkt weist 49% Feststoffgehalt auf und ist völlig wasserverdünnbar. Es entspricht im wesentlichen der Formel I, worin $R^1$ für

$$\begin{array}{l} -CH \\ \quad | \\ \quad CH_2COO^-M^+, \end{array}$$

$R^2$, $R^3$, $R^6$ und teilweise $R^4$ $-H$ sowie $R^5$ und der Rest von $R^4$ für Propenyl stehen, $R^7$ einen Rest darstellt, der 2,2-Bis-(4-oxyphenyl)-propangruppen, $-CH_2CH(OH)CH_2$-Gruppen und 2,2-Bis-3-allyl-4-oxyphenyl)-propangruppen enthält, sowie X Isopropyliden und $M^+$ zu 100% eine Gruppe der Formel $HOCH_2(CH_3)_2\overset{+}{N}H(CH_3)_2$ bedeuten.

## Beispiel 23

Man vermischt eine Lösung von Phenol VII (50 g; 0,027 Mol) in 2-Butoxyäthanol mit Asparaginsäure (6,6 g; 0,050 Mol) und 1,4-Diazabicyclo[2,2,2]octan (5,6 g; 0,050 Mol). Das Gemisch wird gerührt, auf 100°C erhitzt und 30 Minuten bei dieser Temperatur gehalten. Nach Abkühlung auf 80°C versetzt man mit 91%igem Paraformaldehyd (5 g; 0,15 Mol). Dieses Gemisch wird 3 Stunden bei 80°C gerührt, wonach der gemessene freie Formaldehydgehalt des Gemischs auf 0,98% gefallen ist. Das Produkt weist 62% Feststoffgehalt auf und ist wasserverdünnbar. Es entspricht im wesentlichen der Formel I, worin $R^1$ für

$$\begin{array}{l} -CH- \\ \quad | \\ \quad CH_2COO^-M^+ \end{array}$$

und $R^2$, $R^3$, $R^4$, $R^5$ und $R^6$ je für $-H$ stehen, $R^7$ einen aus Einheiten der Formel XII, worin r einen Durchschnittswert von 4,0 aufweist, bestehenden Rest darstellt, $(m + p) = 2$, $n = 1$, sowie $R^9$ p-tert.Butylphenoxy, X Isopropyliden und $M^+$ eine Gruppe der Formel

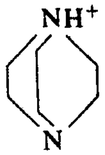

(XIV)

bedeuten.

## Beispiel 24

Eine Formulierung besteht aus 22,4 g Produkt aus Beispiel 3, 3,0 g Aminoplast I, 0,4 g 10%iger Lösung des p-Toluolsulfonatsalzes von 2-(Dimethylamino)-äthanol sowie der erforderlichen Menge Wasser, damit sich eine Viskosität von 20—30 mPa s bei 25°C ergibt.

Die Formulierung wird durch Schleuderbeschichtung auf verzinntes Stahlblech aufgebracht, wobei ein 2 bis 4 µm dicker Überzug verbleibt. Die Bleche werden dann 3 Minuten auf 215°C erhitzt und geprüft. Die Ergebnisse sind in Tabelle 1 angegeben.

## Beispiel 25

Eine Formulierung besteht aus 11,2 g Produkt aus Beispiel 3, 3,0 g Aminoplast II sowie der erforderlichen Menge Wasser, damit sich eine Viskosität von 20—30 mPa s bei 25°C ergibt. Die Formulierung wird aufgebracht und gehärtet wie in Beispiel 24 beschrieben und dann geprüft. Die Ergebnisse sind in Tabelle 1 angegeben.

## Beispiel 26

Eine Überzugsformulierung wird dadurch hergestellt, daß man das Produkt aus Beispiel 8 (90 g) auf 60°C erwärmt und eine Lösung von Phenoplast I (10,7 g) in 2-Butoxyäthanol (2,7 g) und danach destilliertes Wasser (20 g) dazugibt. Das Gemisch wird 30 Minuten bei 60°C gehalten und dann abgekühlt. Die erhaltene Zusammensetzung weist 30,1% Feststoffgehalt und eine Viskosität von 1,7 Pa s bei 25°C auf.

Eine Probe dieser Zusammensetzung (33,2 g) vermischt man mit einer 10%igen Lösung des p-Toluolsulfonatsalzes von 2-(Dimethylamino)-äthanol (0,8 g) und verdünnt mit Wasser auf eine Viskosität von 20—30 mPa s bei 25°C. Die Beschichtungen werden wie in Beispiel 24 beschrieben aufgebracht und durch 10 Minuten Erhitzen auf 200°C gehärtet. Dann werden die Überzüge geprüft und die Ergebnisse sind in Tabelle 1 angegeben.

## Beispiel 27

Eine Überzugsformulierung wird dadurch hergestellt, daß man das Produkt aus Beispiel 6 (337 g) mit Phenoplast I (33,7 g) un 2-Butoxyäthanol (17,2 g) vermischt. Nach Zugabe von destilliertem Wasser (100 g) weist die erhaltene Lösung eine Viskosität von 4,8 Pa s bei 25°C und 27,9% Feststoffgehalt auf. Nach 3 Monaten bei Raumtemperatur zeigt die Lösung keine Anzeichen von Entmischung.

Zu dieser Lösung (35,8 g) gibt man eine 10%ige wäßrige Lösung des p-Toluolsulfonatsalzes von 2-(Dimethylamino)-äthanol (0,6 g). Dann verdünnt man weiter mit destilliertem Wasser auf eine Viskosität von 20—30 mPa s bei 25°C, bringt die Lösung wie in Beispiel 24 beschrieben auf und härtet durch 10 Minuten Erhitzen auf 200°C. Dann werden die Überzüge geprüft und die Ergebnisse sind in Tabelle 1 angegeben.

## Beispiel 28

Entsprechend einem Feststoffverhältnis von 66:34 vermischt man das Produkt aus Beispiel 15 (50 g) mit Phenoplast II (22 g) und gibt entionisiertes Wasser dazu, um den Feststoffgehalt auf 26% zu bringen. Mittels einer Spiralrakel (Rakel Nr. 3 K) bringt man auf verzinntes Stahlblech einen Überzug auf und härtet durch 12 Minuten Erhitzen auf 200°C. Die Prüfergebnisse sind in Tabelle 1 angegeben.

Tabelle 1

| Prüfung | Beispiel 24 | Beispiel 25 | Beispiel 26 | Beispiel 27 | Beispiel 28 |
|---|---|---|---|---|---|
| Reiben mit MEK[1]) | Gut | Gut | Gut | Gut | Gut |
| Keilbiegung[2]), gut zu | 75% | 70% | 50% | 60% | 80% |
| Pasteurisieren in Wasser 75°C/45 Minuten[3]) | Gut | Gut | Gut | Gut | – |
| Pasteurisieren in Bier 82°C/30 Minuten[3]) | Gut | Gut | – | – | – |
| In Wasser gekocht 100°C/6 Stunden | Versagt | Gut | Erweicht | Gut | – |
| 2% Essigsäure 100°C/3 Stunden[3]) | – | – | – | Gut | – |
| 2% Essigsäure 100°C/6 Stunden[3]) | – | – | Gut | – | – |
| 3% Essigsäure 100°C/6 Stunden[3]) | – | – | – | – | Gut |
| Sterilisierung 120°C/1 Stunde[4]) | – | – | Gut | Gut | Gut |

Ein Strich (–) bedeutet, daß keine Prüfung ausgeführt wurde.

[1]) Bei dem MEK-Reibtest wird die beschichtete Oberfläche 50mal mit einem in Äthylmethylketon getränkten Wattebausch abgerieben und die Oberfläche wird auf Entfernung von Material oder Erweichung untersucht. »Gut« heißt, daß kein Effekt beobachtet wurde.

[2]) Bei der Keilbiegungsprüfung handelt es sich um die Schlagbiegung von Proben über einen 10 cm langen Dorn, der an einem Ende einen Außendurchmesser von 6 mm besitzt und am anderen Ende zugespitzt ist. Die Proben werden dann untersucht, um den Prozentsatz der Probenlänge zu bestimmen, von der die Beschichtung nicht abgeblättert ist.

[3]) Bei den Pasteurisierungs- und Kochprüfungen werden die Proben in Wasser, Bier bzw. Essigsäure für die angegebene Zeit auf die angegebene Temperatur erhitzt und die beschichtete Oberfläche wird auf irgendwelche Schäden untersucht. »Gut« heißt, daß keine Schäden beobachtet wurden.

[4]) Bei der Sterilisierprüfung wird die Probe in Dampf bei 120°C 60 Minuten in einem Autoklaven erhitzt und die Oberfläche wird dann auf Schäden untersucht. »Gut« heißt, daß keine Schäden beobachtet wurden.

## Beispiele 29–34

Überzugsformulierungen werden dadurch hergestellt, daß man die Produkte aus Beispielen 4, 5 bzw. 9 bis 12 in einem Feststoffverhältnis von 75:25 mit Phenoplast I vermischt. Die erhaltenen Lösungen werden mit Wasser und einer 10%igen wäßrigen Lösung des p-Toluolsulfonatsalzes von 2-(Dimethylamino)-äthanol (0,4 g 10%ige wäßrige Lösung auf 10 g Harzfeststoffgehalt) verdünnt. Die Lösungen bringt man auf Aluminiumblech auf und härtet, wie in Beispiel 24 beschrieben. Dann werden die Überzüge geprüft und die Ergebnisse sind in Tabelle 2 angegeben.

Tabelle 2

| Prüfung | Beispiel Nr. 29 | 30 | 31 | 32 | 33 | 34 |
|---|---|---|---|---|---|---|
| Reiben mit MEK | Gut | Gut | Gut | Gut | Gut | Gut |
| Keilbiegung gut zu | 80–85% | 75–80% | 70% | 80–85% | 85% | – |
| 2% Essigsäure 100°C/6 Stunden | Gut | Gut | Gut | Gut | Gut | Gut |

## Beispiel 35

In diesem Beispiel wird ein erfindungsgemäßes Carbonsäuresalz durch Erhitzen mit einem Salz einer starken Säure mit einem Amin, jedoch in Abwesenheit eines Aminoplasts oder Phenolplasts gehärtet.

Eine Formulierung besteht aus 5 g Produkt aus Beispiel 3, 0,2 g 10%iger Lösung des p-Toluolsulfonatsalzes von 2-(Dimethylamino)-äthanol sowie der erforderlichen Menge Wasser, damit sich eine Viskosität von 20–30 mPa s bei 25°C ergibt.

Die Formulierung wird durch Schleuderbeschichtung auf verzinntes Stahlblech aufgebracht, wobei ein 2 bis 4 μm dicker Überzug verbleibt. Dieser wird 5 Minuten bei 200°C gehärtet. Der Überzug besteht die oben beschriebene MEK-Reibprüfung bzw. Pasteurisierprüfung in Wasser.

## Beispiel 36

In diesem Beispiel wird ein erfindungsgemäßes Carbonsäuresalz zusammen mit einem Aminoplast durch Elektrophorese auf einer Metalloberfläche abgeschieden.

Eine Überzugsformulierung wird dadurch hergestellt, daß man das Produkt aus Beispiel 15 in einem Feststoffverhältnis von 80 : 20 mit Aminoplast II vermischt. Das entstandene Gemisch wird mit entionisiertem Wasser auf 10% Feststoffgehalt verdünnt, in ein elektrophoretisches Beschichtungsbad gegeben und dazu verwendet, Stahl und verzinntes Stahlblech an der Anode zu überziehen. Nach 10 Sekunden Stromdurchgang bei 50 Volt erhält man porenfreie Filme.

## Beispiele 37–40

Überzugsformulierungen werden dadurch hergestellt, daß man das Produkt aus Beispiel 15 in einem Feststoffverhältnis von 80 : 20 mit den in Tabelle 3 angeführten Aminoplasten vermischt und dann mit entionisiertem Wasser auf 26% Feststoffgehalt verdünnt. Die Überzüge werden mittels einer Spiralrakel (Rakel Nr. 3 K) auf verzinntes Stahlblech aufgebracht und 6 Minuten bei 215°C gehärtet. Die nach verschiedenen Eintauchprüfungen erhaltene Haftung ist in Tabelle 3 angegeben.

Tabelle 3

| Aminoplast | Beispiel 37<br>Aminoplast I | Beispiel 38<br>Aminoplast II | Beispiel 39<br>Aminoplast III | Beispiel 40<br>Aminoplast IV |
|---|---|---|---|---|
| In Wasser gekocht 100°C/1 Stunde | 0 | 0 | 0 | 0 |
| 3% Essigsäure 100°C/20 Minuten | 5 | 100 | 0 | 0 |

Die zu prüfende, überzogene Tafel wird kreuzschraffiert, in dem man mit einer Messerklinge parallele Linien 3 mm voneinander zuerst in einer Richtung und dann weitere unter 90° dazu einschneidet. Danach wird ein Streifen Klebeband fest auf die gravierte Fläche aufgepreßt. Das Band wird mit schnellem, gleichförmigem Zug abgezogen und die kreuzschraffierte Fläche auf Abtragung des Überzugs untersucht. Die prozentuale Abtragung wird wie folgt in der Tabelle aufgezeichnet:

0= Kein Haftungsverlust.
100= Vollständige Abtragung des Überzugs.

**Patentansprüche für die Vertragsstaaten: BE, CH, DE, FR, GB, IT, LI, NL, SE**

1. Wasserlösliche oder in Wasser dispergierbare Carbonsäuresalze der allgemeinen Formel

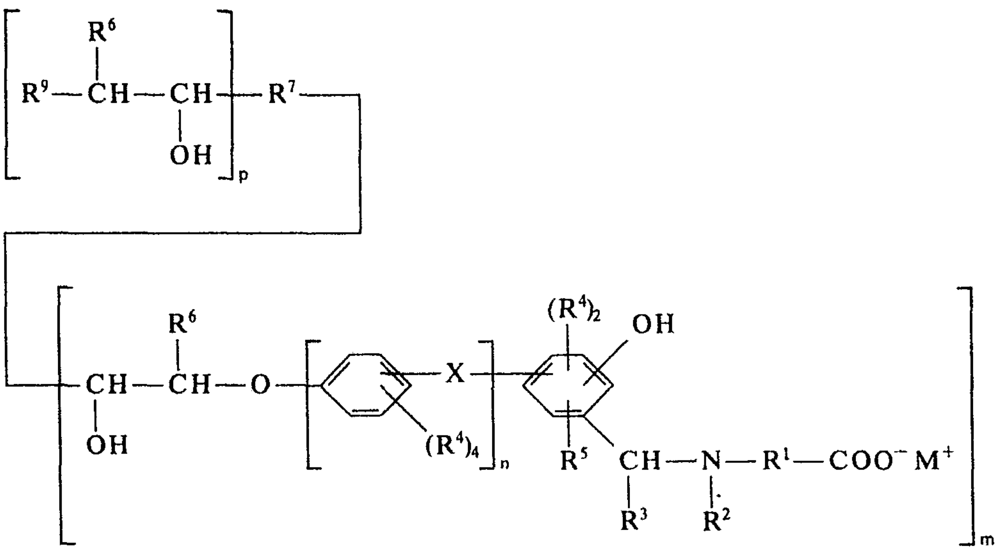

(I)

worin $R^1$ für eine aliphatische, aromatische oder araliphatische, gegebenenfalls eine weitere Gruppe $-COO^-M^+$ enthaltende zweiwertige Gruppe mit 1 bis 10 Kohlenstoffatomen steht, $R^2$ ein Wasserstoffatom, eine Gruppe der Formel

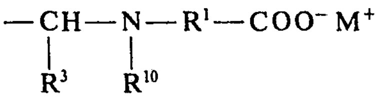

(II)

oder eine gegebenenfalls durch eine weitere Gruppe $-COO^-M^+$ oder eine Gruppe der Formel $-CH(R^3)OH$ oder $-CH(R^3)OR^8$ substituierte Alkylgruppe mit 1 bis 6 Kohlenstoffatomen darstellt, mit der Maßgabe, daß $R^1$ und $R^2$ zusammen nicht mehr als eine Gruppe der Formel $-COO^-M^+$ enthalten, $R^3$ ein Wasserstoffatom oder eine Alkylgruppe mit 1 bis 4 Kohlenstoffatomen bedeutet, die $R^4$, die gleich oder verschieden sein können, jeweils für ein Wasserstoffatom, ein Halogenatom, eine Alkylgruppe mit 1 bis 4 Kohlenstoffatomen oder eine Alkenylgruppe mit 2 bis 4 Kohlenstoffatomen stehen, $R^5$ in ortho- oder para-Stellung zur angegebenen phenolischen Hydroxylgruppe steht und ein Wasserstoffatom, ein Halogenatom, eine Alkylgruppe mit 1 bis 4 Kohlenstoffatomen, eine Alkenylgruppe mit 2 bis 4 Kohlenstoffatomen, eine Gruppe der Formel $-CH(R^3)OH$, eine Gruppe der Formel $-CH(R^3)OR^8$ oder eine Gruppe der Formel II ist, $R^6$ entweder ein Wasserstoffatom, wobei $R^7$ dann den Rest eines Polyepoxids nach Wegnahme von (m + p) 1,2-Epoxidgruppen darstellt, oder eine kovalente Bindung zur Gruppe $R^7$ bedeutet, wobei $R^7$ dann zusammen mit der angegebenen Hydroxyäthylengruppe einen gegebenenfalls durch aliphatische, cycloaliphatische und/oder heterocyclische Gruppen substituierten cycloaliphatischen Ring darstellt, $R^8$ für eine Alkylgruppe mit 1 bis 6 Kohlenstoffatomen oder eine Alkoxyalkylgruppe mit jeweils 1 bis 6 Kohlenstoffatomen in der Alkoxy- und Alkylgruppe steht, $R^9$ den Rest eines einwertigen Phenols, eines sekundären Monoamins oder einer Monocarbonsäure nach Wegnahme eines Wasserstoffatoms aus der phenolischen Hydroxylgruppe, der Carbonsäuregruppe bzw. der sekundären Aminogruppe darstellt, m 1, 2, 3 oder 4, n null oder 1 und p null oder 1 sind, derart daß (m + p) mindestens zwei und höchstens 4 beträgt, X eine Alkylen- oder Alkylidengruppe mit 1 bis 3 Kohlenstoffatomen, eine Carbonyl- oder Sulfonylgruppe, ein Sauerstoff- oder Schwefelatom oder eine Valenzbindung bedeutet und $M^+$ für ein Wasserstoffion oder ein sich von einem Alkalimetall, Ammoniak oder einem Amin ableitendes einwertiges Kation, einschließlich quartärer Ammoniumkationen, steht, mit der Maßgabe, daß mindestens 25% der $M^+$-Ionen als solches einwertiges Kation vorliegen, wobei sich die angegebene phenolische Hydroxylgruppe in ortho- oder para-Stellung zur gezeigten Gruppe

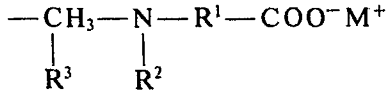

befindet und wobei $R^{10}$ ein Wasserstoffatom, eine Gruppe $-COO^-M^+$ oder eine gegebenenfalls durch eine weitere Gruppe $-COO^-M^+$ oder eine Gruppe der Formel $-CH(R^3)OH$ oder $-CH(R^3)OR^8$ substituierte Alkylgruppe mit 1 bis 6 Kohlenstoffatomen bedeutet.

2. Salze nach Anspruch 1, dadurch gekennzeichnet, daß $R^7$ einen solchen Rest eines Polyepoxids mit einem mittleren Molekulargewicht von 1000 bis 5000 darstellt.

3. Salze nach Anspruch 1 oder 2, dadurch gekennzeichnet, daß sie weiterhin der Formel

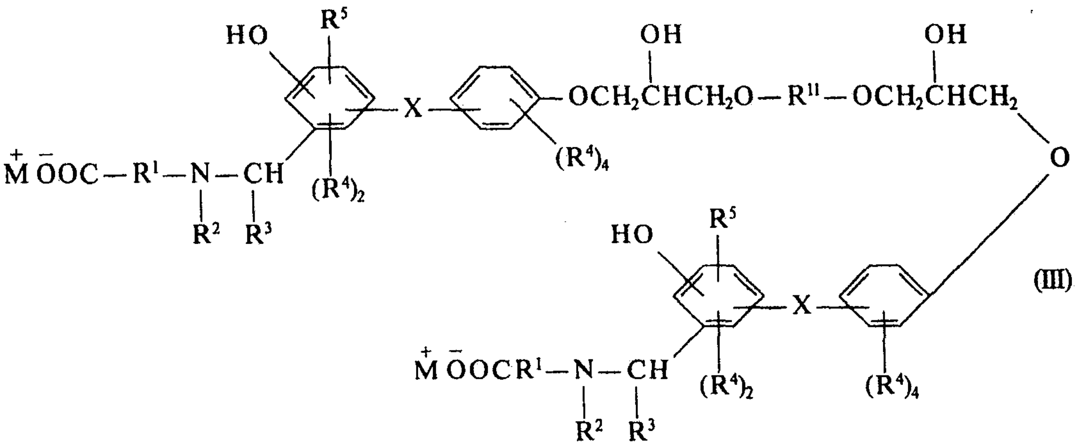

(III)

oder

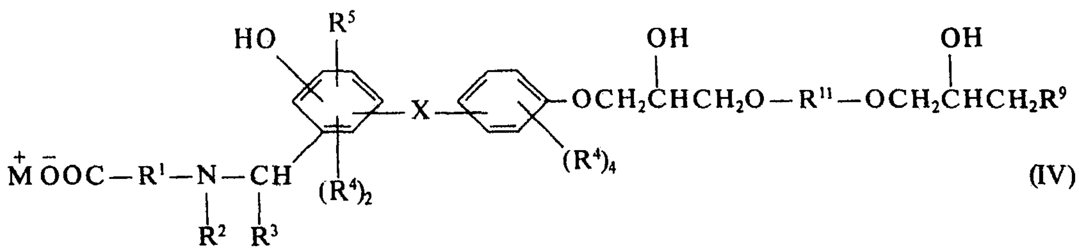

(IV)

entsprechen, worin $R^1$, $R^2$, $R^3$, $R^4$, $R^5$, $R^9$, X und $M^+$ die in Anspruch 1 angegebenen Bedeutungen haben und $R^{11}$ für den Rest eines aliphatischen, cycloaliphatischen oder aromatischen Diglycidyläthers oder -esters nach Wegnahme der beiden Glycidylgruppen steht.

4. Salze nach einem der Ansprüche 1 bis 3, dadurch gekennzeichnet, daß $R^1$ für eine Alkylengruppe mit 1 bis 4 Kohlenstoffatomen oder eine Phenylengruppe steht.

5. Salze nach Anspruch 3 oder 4, dadurch gekennzeichnet, daß $R^{11}$ für einen Rest der Formel

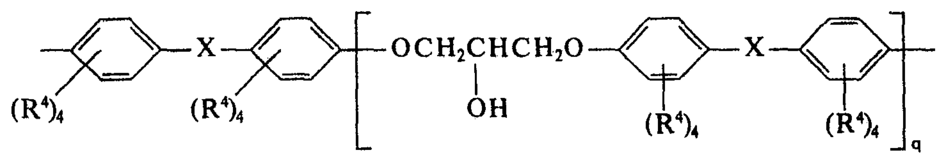

(V)

steht, worin $R^4$ und X die in Anspruch 1 angegebenen Bedeutungen haben und q null oder eine ganze Zahl von 1 bis 20 ist.

6. Verfahren zur Herstellung von Salzen nach einem der vorhergehenden Ansprüche, gekennzeichnet durch eine Mannich-Reaktion eines Harzes mit Phenolendgruppen der Formel

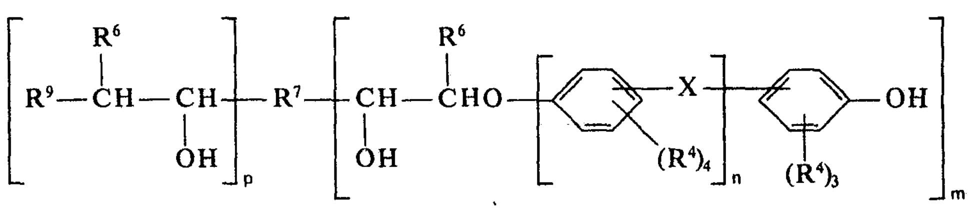

(VI)

worin $R^4$, $R^6$, $R^7$, X, m und n die in Anspruch 1 angegebenen Bedeutungen haben, mit der Maßgabe, daß mindestens eines der beiden Kohlenstoffatome in ortho-Stellung bzw. das eine Kohlenstoffatom in para-Stellung zu dem die angegebene phenolische Hydroxylgruppe tragenden Kohlenstoffatom unsubstituiert ist, in Gegenwart einer Quelle für $M^+$-Ionen mit einem Aldehyd der Formel

$R^3CHO$ (VII)

und einer Aminosäure der Formel

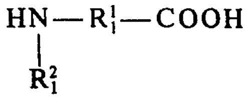

(VIII)

worin $M^+$ und $R^3$ die in Anspruch 1 angegebenen Bedeutungen haben, $R_1^1$ für eine aliphatische, aromatische oder araliphatische, gegebenenfalls einen Carbonsäuresubstituenten (—COOH) enthaltende zweiwertige Gruppe steht und $R_1^2$ ein Wasserstoffatom, eine Gruppe der Formel II oder eine gegebenenfalls durch eine Carbonsäuregruppe (—COOH) oder eine Gruppe der Formel $-CH(R^3)OH$ oder $-CH(R^3)OR^8$ substituierte Alkylgruppe mit 1 bis 6 Kohlenstoffatomen darstellt, mit der Maßgabe, daß nur eines von $R_1^1$ und $R_1^2$ besagten Carbonsäuresubstituenten enthalten darf, wobei $R^1$ die in Anspruch 1 oder 4 sowie $R^3$, $R^8$ $R^{10}$ die in Anspruch 1 angegebenen Bedeutungen haben.

7. Verfahren nach Anspruch 6, dadurch gekennzeichnet, daß als Aminosäure Sarkosin, Iminodiessigsäure, Anthranilsäure, Glycin, Glutaminsäure, Asparaginsäure oder p-Aminobenzoesäure vorliegt.

8. Verfahren nach Anspruch 6 oder 7, dadurch gekennzeichnet, daß man die Reaktionspartner in Gegenwart einer zur mindestens teilweisen Neutralisation der Aminosäure ausreichenden Menge Base erhitzt, wobei als Base Natriumhydroxyd, Natriumcarbonat, Kaliumhydroxyd, Kaliumcarbonat, Ammoniak, Triäthylamin, Triäthanolamin, 2-(Dimethylamino)-2-methyl-1-propanol oder 2-(Dimethylamino)-äthanol vorliegt.

9. Härtbare Zusammensetzungen, dadurch gekennzeichnet, daß sie aus 100 Gewichtsteilen eines Carbonsäuresalzes nach einem der Ansprüche 1 bis 5, berechnet auf seinen Feststoffgehalt, und 2 bis 200 Gewichtsteilen, berechnet auf dessen Feststoffgehalt, eines Aminoplasts, eines Phenol/Formaldhydharzes oder eines maskierten Polyisocyanats bestehen, wobei das Aminoplast bzw. Phenol/Formaldehydharz mindestens 2 direkt an ein Amidstickstoffatom oder -atome bzw. direkt an Kohlenstoffatome eines Phenolrings gebundene Gruppen der Formel

$$-CH_2OR^{12} \qquad (XI)$$

aufweist, worin $R^{12}$ für ein Wasserstoffatom oder eine Alkylgruppe mit 1 bis 6 Kohlenstoffatomen steht, wobei der Feststoffgehalt den prozentualen Rückstand bedeutet, der nach 3 Stunden langem Erhitzen eine 1 g Materialprobe in einer offenen Schale von 5 cm Durchmesser in einem Ofen bei 120°C bei Atmosphärendruck verbleibt.

10. Verfahren zur Oberflächenbeschichtung, dadurch gekennzeichnet, daß man eine Zusammensetzung nach Anspruch 9 bzw. in Abwesenheit eines Aminoplasts, eines Phenyl/Formaldehydharzes oder eines maskierten Polyisocyanats ein Salz der Formel I, wie in einem der Ansprüche 1 bis 5 definiert, worin $R^5$ eine Gruppe der Formel $-CH(R^3)OH$ bedeutet, aufbringt und auf 100° bis 275°C erhitzt.

11. Verwendung einer Zusammensetzung nach Anspruch 9 zum Überziehen von Oberflächen.

**Patentansprüche für den Vertragsstaat: AT**

1. Verfahren zu Herstellung von wasserlöslichen oder in Wasser dispergierbaren Carbonsäuresalzen der allgemeinen Formel

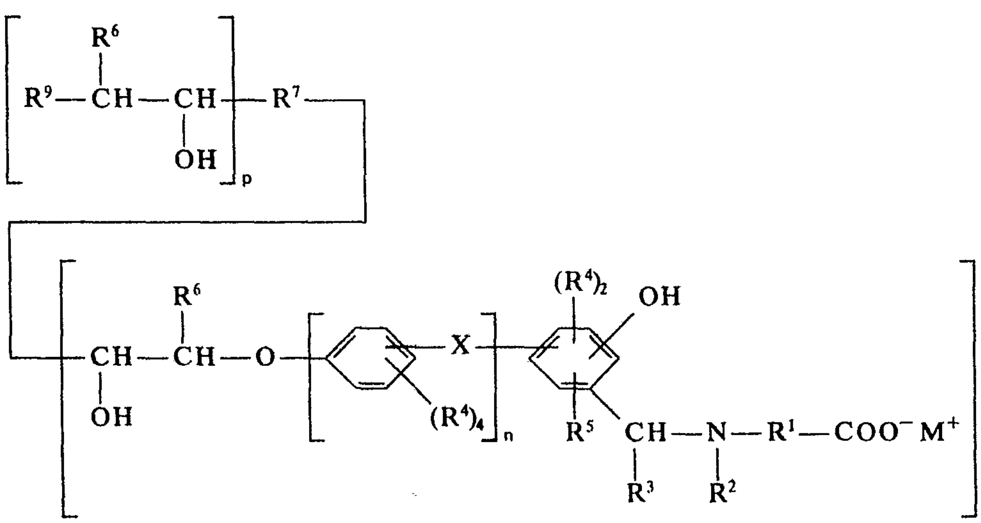

(I)

worin $R^1$ für eine aliphatische, aromatische oder araliphatische, gegebenenfalls eine weitere Gruppe $-COO^-M^+$ enthaltende zweiwertige Gruppe mit 1 bis 10 Kohlenstoffatomen steht, $R^2$ ein Wasserstoffatom, eine Gruppe der Formel

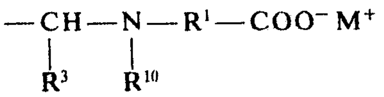

(II)

oder eine gegebenenfalls durch eine weitere Gruppe $-COO^-M^+$ oder eine Gruppe der Formel $-CH(R^3)OH$ oder $-CH(R^3)OR^8$ substituierte Alkylgruppe mit 1 bis 6 Kohlenstoffatomen darstellt, mit der Maßgabe, daß $R^1$ und $R^2$ zusammen nicht mehr als eine Gruppe der Formel $-COO^-M^+$ enthalten, $R^3$ ein Wasserstoffatom oder eine Alkylgruppe mit 1 bis 4 Kohlenstoffatomen bedeutet, die $R^4$, die gleich oder verschieden sein können, jeweils für ein Wasserstoffatom, ein Halogenatom, eine Alkylgruppe mit 1 bis 4 Kohlenstoffatomen oder eine Alkenylgruppe mit 2 bis 4 Kohlenstoffatomen stehen, $R^5$ in ortho- oder para-Stellung zur angegebenen phenolischen Hydroxylgruppe steht und ein Wasserstoffatom, ein Halogenatom, eine Alkylgruppe mit 1 bis 4 Kohlenstoffatomen, eine Alkenylgruppe mit 2 bis 4 Kohlenstoffatomen, eine Gruppe der Formel $-CH(R^3)OH$, eine Gruppe der Formel $-CH(R^3)OR^8$ oder eine Gruppe der Formel II ist, $R^6$ entweder ein Wasserstoffatom, wobei $R^7$ dann den Rest eines Polyepoxids nach Wegnahme von (m + p) 1,2-Epoxidgruppen darstellt, oder eine kovalente Bindung zur Gruppe $R^7$ bedeutet, wobei $R^7$ dann zusammen mit der angegebenen Hydroxyäthylengruppe einen gegebenenfalls durch aliphatische, cycloaliphatische und/oder heterocyclische Gruppen substituierten cycloaliphatischen Ring darstellt, $R^8$ für eine Alkylgruppe mit 1 bis 6 Kohlenstoffatomen oder eine Alkoxyalkylgruppe mit jeweils 1 bis 6 Kohlenstoffatomen in der Alkoxy- und Alkylgruppe steht, $R^9$ den Rest eines einwertigen Phenols, eines sekundären Monoamins oder einer Monocarbonsäure nach Wegnahme eines Wasserstoffatoms aus der phenolischen Hydroxylgruppe, der Carbonsäuregruppe bzw. der sekundären Aminogruppe darstellt, m 1, 2, 3 oder 4, n null oder 1 und p null oder 1 sind, derart daß (m + p) mindestens zwei und höchstens 4 beträgt, X eine Alkylen- oder Alkylidengruppe mit 1 bis 3 Kohlenstoffatomen, eine Carbonyl- oder Sulfonylgruppe, ein Sauerstoff- oder Schwefelatom oder eine Valenzbindung bedeutet und $M^+$ für ein Wasserstoffion oder ein sich von einem Alkalimetall, Ammoniak oder einem Amin ableitendes einwertiges Kation, einschließlich quartärer Ammoniumkationen, steht, mit der Maßgabe, daß mindestens 25% der $M^+$-Ionen als solches einwertiges Kation vorliegen, wobei sich die angegebene phenolische Hydroxylgruppe in ortho- oder para-Stellung zur gezeigten Gruppe

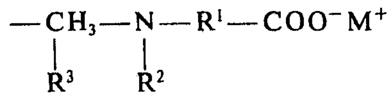

befindet und wobei $R^{10}$ ein Wasserstoffatom, eine Gruppe $-COO^-M^+$ oder eine gegebenenfalls durch eine weitere Gruppe $-COO^-M^+$ oder eine Gruppe der Formel $-CH(R^3)OH$ oder $-CH(R^3)OR^8$ substituierte Alkylgruppe mit 1 bis 6 Kohlenstoffatomen bedeutet, gekennzeichnet durch eine Mannich-Reaktion eines Harzes mit Phenolendgruppen, der Formel

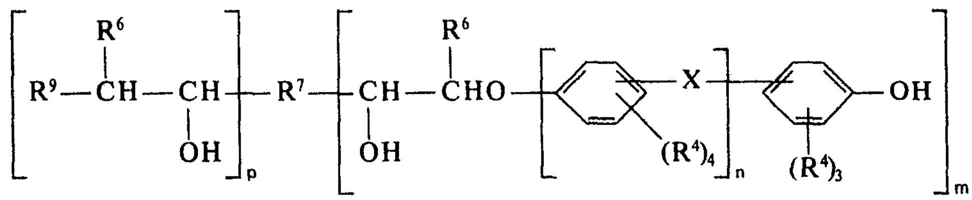

(VI)

worin $R^4$, $R^6$, $R^7$, X, m und n die zuvor angegebenen Bedeutungen haben, mit der Maßgabe, daß mindestens eines der beiden Kohlenstoffatome in ortho-Stellung bzw. das eine Kohlenstoffatom in para-Stellung zu dem die angegebene phenolische Hydroxylgruppe tragenden Kohlenstoffatom unsubstituiert ist, in Gegenwart einer Quelle für $M^+$-Ionen mit einem Aldehyd der Formel

$$R^3CHO \qquad \text{(VII)}$$

und einer Aminosäure der Formel

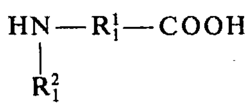

(VIII)

worin $M^+$ und $R^3$ die zuvor angegebenen Bedeutungen haben, $R_1^1$ für eine aliphatische, aromatische oder araliphatische, gegebenenfalls einen Carbonsäuresubstituenten (—COOH) enthaltende zweiwertige Gruppe mit 1 bis 10 Kohlenstoffatomen steht und $R_1^2$ ein Wasserstoffatom, eine Gruppe der Formel II oder eine gegebenenfalls durch eine Carbonsäuregruppe (—COOH) oder eine Gruppe der Formel $-CH(R^3)OH$ oder $-CH(R^3)OR^8$ substituierte Alkylgruppe mit 1 bis 6 Kohlenstoffatomen darstellt,

mit der Maßgabe, daß nur eines von $R_1^1$ und $R_1^2$ besagten Carbonsäuresubstituenten enthalten darf, wobei $R^1$, $R^3$, $R^8$ und $R^{10}$ die zuvor angegebenen Bedeutungen haben.

2. Verfahren nach Anspruch 1, dadurch gekennzeichnet, daß als Aminosäure Sarkosin, Iminodiessigsäure, Anthranilsäure, Glycin, Glutaminsäure, Asparaginsäure oder p-Aminobenzoesäure vorliegt.

3. Verfahren nach Anspruch 1 oder 2, dadurch gekennzeichnet, daß man die Reaktionspartner in Gegenwart einer zur mindestens teilweisen Neutralisation der Aminosäure ausreichenden Menge Base erhitzt, wobei als Base Natriumhydroxyd, Natriumcarbonat, Kaliumhydroxyd, Kaliumcarbonat, Ammoniak, Triäthylamin, Triäthanolamin, 2-(Dimethylamino)-2-methyl-1-propanol oder 2-(Dimethylamino)-äthanol vorliegt.

4. Verfahren nach einem der Ansprüche 1 bis 3, dadurch gekennzeichnet, daß man ein Harz der Formel VI einsetzt, worin $R^7$ einen Polyepoxidrest mit einem mittleren Molekulargewicht von 1000 bis 5000 darstellt.

5. Verfahren nach einem der Ansprüche 1 bis 4 zur Herstellung von Salzen der Formeln

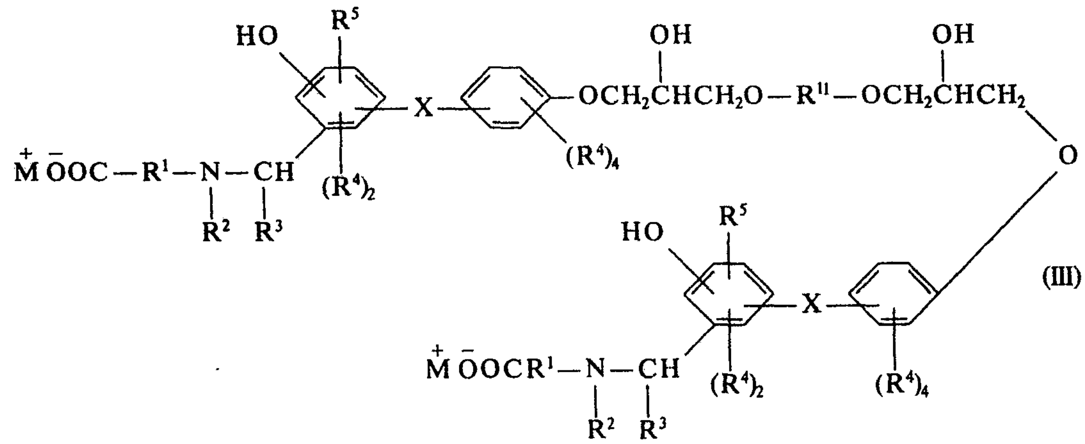

(III)

oder

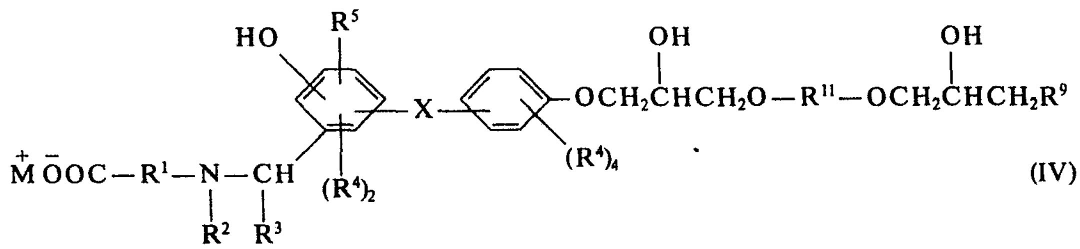

(IV)

worin $R^1$, $R^2$, $R^3$, $R^4$, $R^5$, $R^9$, X und $M^+$ die in Anspruch 1 angegebenen Bedeutungen haben und $R^{11}$ für den Rest eines aliphatischen, cycloaliphatischen oder aromatischen Diglycidyläthers oder -esters nach Wegnahme der beiden Glycidylgruppen steht.

6. Verfahren nach einem der Ansprüche 1 bis 5, dadurch gekennzeichnet, daß man eine Aminosäure der Formel VIII einsetzt, worin $R_1^2$ eine Gruppe der Formel II bedeutet, deren $R_1^1$ für eine Alkylengruppe mit 1 bis 4 Kohlenstoffatomen oder eine Phenylengruppe steht.

7. Verfahren nach Anspruch 5 zur Herstellung von Salzen der Formeln III oder IV, worin $R^{11}$ für einen Rest der Formel

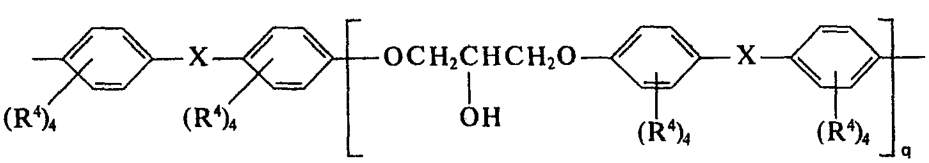

(V)

steht, worin $R^4$ und X die in Anspruch 1 angegebenen Bedeutungen haben und q null oder eine ganze Zahl von 1 bis 20 ist.

**Claims for the contracting Staates: BE, CH, DE, FR, GB, IT, LI, NL, SE**

1. Water-soluble or water-dispersible carboxylate salts of the general formula

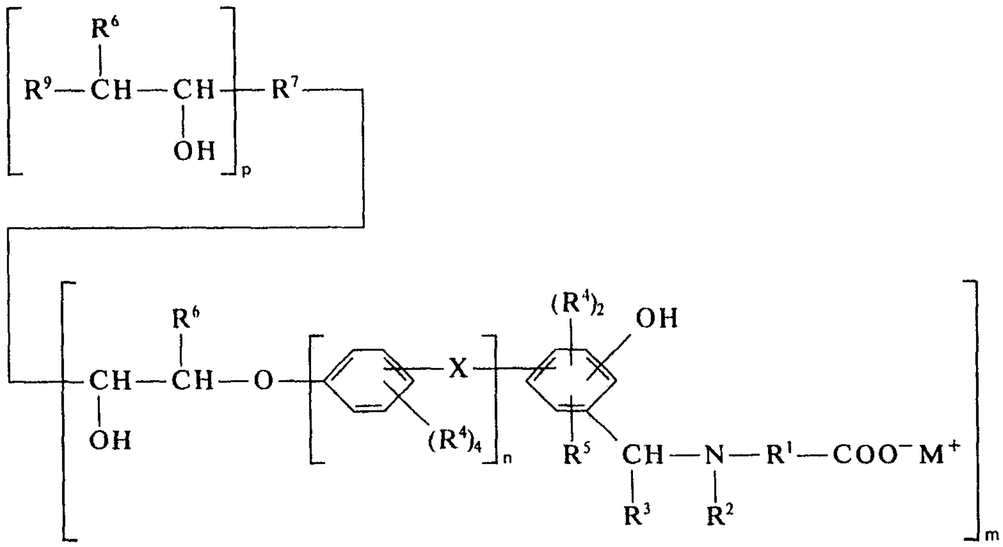

(I)

wherein $R^1$ represents an aliphatic, aromatic, or araliphatic divalent group of 1 to 10 carbon atoms or a said divalent group substituted by a further $-COO^-M^+$ groups, $R^2$ represents a hydrogen atom, a group of formula

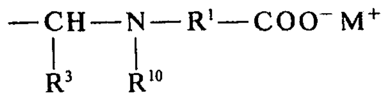

(II)

an alkyl group of 1 to 6 carbon atoms, a said alkyl group substituted by a further group $-COO^-M^+$, a said alkyl group substituted by a group of formula $-CH(R^3)OH$, or a said alkyl group substituted by a group of formula $-CH(R^3)OR^8$, with the proviso that $R^1$ and $R^2$ contain together not more than one group of formula $-COO^-M^+$, $R^3$ represents a hydrogen atom or an alkyl group of 1 to 4 carbon atoms, each $R^4$, which may be the same of different, represents a hydrogen atom, a halogen atom, an alkyl group of 1 to 4 carbon atoms, or an alkenyl group of 2 to 4 carbon atoms, $R^5$ represents an atom or a group bonded to a ring carbon atom which is ortho or para to the indicated phenolic hydroxyl group and is a hydrogen atom, a halogen atom, an alkyl group of 1 to 4 carbon atoms, an alkenyl group of 2 to 4 carbon atoms, a group of formula $-CH(R^3)OH$, a group of formula $-CH(R^3)OR^8$, or a group of formula II, $R^6$ either represents a hydrogen atom, in which case $R^7$ represents the resuide of a polyepoxide after removal of (m + p) 1,2-epoxide groups, or it represents a covalent bond linked to the group $R^7$, in which case $R^7$, together with the indicated hydroxyethylene group, forms a cycloaliphatic ring which is substituted by aliphatic, cycloaliphatic and/or heterocyclic groups, $R^8$ represents an alkyl group of 1 to 6 carbon atoms or an alkoxyalkyl group wherein the alkoxy group and the alkyl group each have from 1 to 6 carbon atoms, $R^9$ represents the residue of a monohydric phenol, a secondary monoamine, or a monocarboxylic acid after removal of the hydrogen atom of the phenolic hydroxyl group, the carboxylic acid group, or the secondary amino group, m represents 1, 2, 3, or 4, n represents zero or 1, p represents zero or 1, such that (m + p) is at least 2 and at most 4, X represents an alkylene or alkylidene group of 1 to 3 carbon atoms, a carbonyl or sulfonyl group, an oxygen or sulfur atom, or a valence bond, $M^+$ represents a hydrogen ion or a monovalent cation derived from an alkali metal, ammonia, or an amine, including quaternary ammonium cations, with the proviso that at least 25% of the ions $M^+$ are a said monovalent cation, the indicated phenolic hydroxyl group being ortho or para to the indicated group

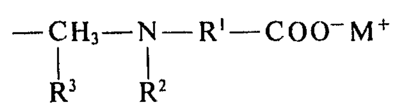

wherein $R^{10}$ denotes a hydrogen atom, a group $-COO^-M^+$, an alkyl group of 1 to 6 carbon atoms, a said alkyl group substituted by a further group $-COO^-M^+$, a said alkyl group substituted by a group of formula $-CH(R^3)OH$, or a said alkyl group substituted by a group of formula $-CH(R^3)OR^8$.

2. A salt as claimed in claim 1, wherein $R^7$ represents a said residue, having an average molecular weight of from 1000 to 5000, of a polyepoxide.

3. A salt as claimed in claim 1 oder claim 2, which ist further of the formulae

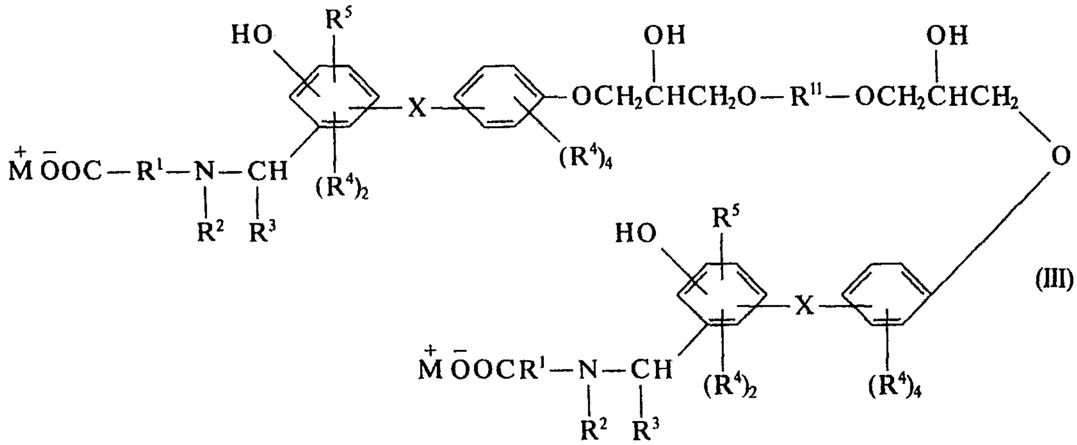

(III)

or

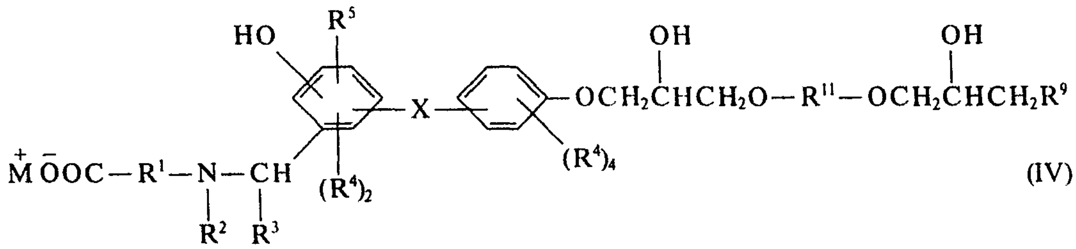

(IV)

wherein $R^1$, $R^2$, $R^3$, $R^4$, $R^5$, $R^9$, X, and $M^+$ are as defined in claim 1 and $R^{11}$ represents the residue of an aliphatic, cycloaliphatic, or aromatic diglycidyl ether or ester after removal of both glycidyl groups.

4. Salts as claimed in any one of claims 1 to 3, wherein $R^1$ represents an alkylene group of 1 to 4 carbon atoms or a phenylene group.

5. Salts as claimed in either of claims 3 or 4, wherein $R^{11}$ represents a residue of the formula

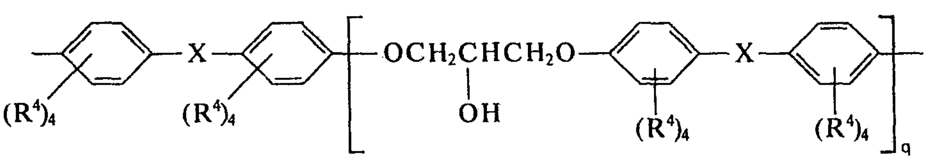

(V)

wherein $R^4$ and X are as hereinbefore defined in claim 1 and q is zero or an integer of from 1 to 20.

6. A process for the preparation of salts as claimed in any preceding claim which comprises a Mannich reaction of a phenolterminated resin of formula

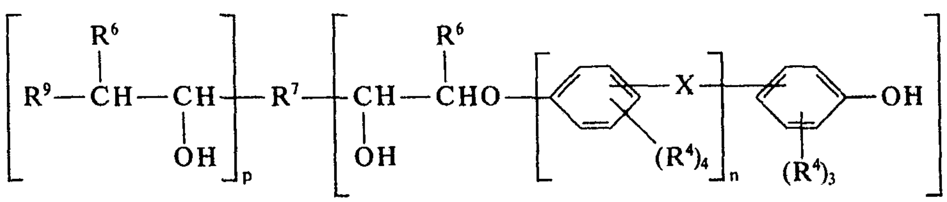

(VI)

wherein $R^4$, $R^6$, $R^7$, X, m, and n are as defined in claim 1, with the proviso that at least one of the two carbon atoms ortho, or the one carbon atom para, to the carbon atom bearing the indicated phenolic hydroxyl group is unsubstituted, in the presence of a source of $M^+$ ions with an aldehyde of formula

$R^3CHO$ (VII)

and an aminoacid of formula

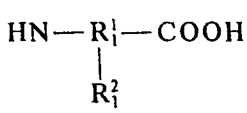

(VIII)

wherein $M^+$ is as defined in claim 1, $R^3$ is as defined in claim 1, $R_1^1$ represents an aliphatic, aromatic, or araliphatic divalent group of 1 to 10 carbon atoms which may contain a carboxylic acid (—COOH) substituent, and $R_1^2$ represents a hydrogen atom, a group of formula II, or an alkyl group of 1 to 6 carbon atoms which may be substituted by a carboxylic acid (—COOH) group or a group of formula $-CH(R^3)OH$ or $-CH(R^3)OR^8$, with the proviso that only one of $R_1^1$ and $R_1^2$ may contain the said carboxylic acid substituent, where $R^1$ has the meaning assigned in claim 1 or 4 and $R^3$, $R^8$, and $R^{10}$ have the meaning assigned in claim 1.

7. A process as claimed in claim 6, wherein the aminoacid is sarcosine, iminodiacetic acid, anthranilic acid, glycine, glutamic acid, aspartic acid, or p-aminobenzoic acid.

8. A process as claimed in claim 6 or claim 7, in which the reactants are heated in the presence of sufficient of a base at least partially to neutralise the aminoacid, the base being sodium hydroxide, sodium carbonate, potassium hydroxide, potassium carbonate, ammonia, triethylamine, triethanolamine, 2-(dimethylamino)-2-methylpropan-1-ol, or 2-(diethylamino)ethanol.

9. Curable compositions comprising 100 parts by weight of a carboxylate salt as claimed in any of claims 1 to 5, calculated on its solids content and 2 to 200 parts by weight, calculated on its solids content, of an aminoplast, a phenol-formaldehyde resin, or a blocked polyisocyanate, the aminoplast or phenol-formaldehyde resin having at least 2 groups of formula

$$-CH_2OR^{12} \qquad (XI)$$

attached directly to an amidic nitrogen atom or atoms or directly attached to carbon atoms of a phenolic ring, where $R^{12}$ represents a hydrogen atom or an alkyl group of 1 to 6 carbon atoms, the solids content denoting the percentage residue remaining after heating 1 g of a sample of material for 3 hours in an open dish of 5 cm diameter, in an oven, at 120°C and under atmospheric pressure.

10. A method of coating a surface which comprises applying a composition as claimed in claim 9 or, in the absence of an aminoplast, a phenol-aldehyde resin, or a blocked polyisocyanate, a salt of formula I as defined in any of claims 1 to 5 where $R^5$ denotes a group of formula $-CH(R^3)OH$, and heating at from 100° to 275°C.

11. Use of a composition as claimed in claim 9 for coating surfaces.

**Claims for the Contracting state: AT**

1. A process for the preparation of water soluble or water-dispersible carboxylates of the general formula

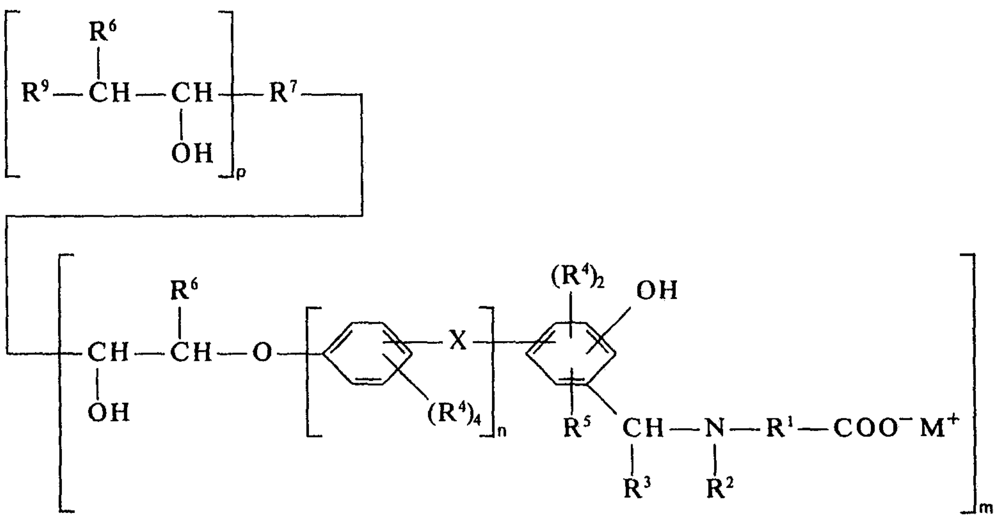

(I)

wherein $R^1$ represents an aliphatic, aromatic, or araliphatic divalent group of 1 to 10 carbon atoms or a said divalent group substituted by a further $-COO^- M^+$ groups, $R^2$ represents a hydrogen atom, a group of formula

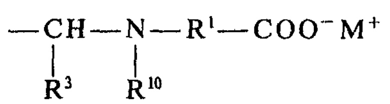

(II)

an alkyl group of 1 to 6 carbon atoms, a said alkyl group substituted by a further group $-COO^- M^+$, a said alkyl group substituted by a group of formula $-CH(R^3)OH$, or a said alkyl group substituted by a

group of formula $-CH(R^3)OR^8$, with the proviso that $R^1$ and $R^2$ contain together not more than one group of formula $-COO^- M^+$, $R^3$ represents a hydrogen atom or an alkyl group of 1 to 4 carbon atoms, each $R^4$, which may be the same of different, represents a hydrogen atom, a halogen atom, an alkyl group of 1 to 4 carbon atoms, or an alkenyl group of 2 to 4 carbon atoms, $R^5$ represents an atom or a group bonded to a ring carbon atom which is ortho or para to the indicated phenolic hydroxyl group and is a hydrogen atom, a halogen atom, an alkyl group of 1 to 4 carbon atoms, an alkenyl group of 2 to 4 carbon atoms, a group of formula $-CH(R^3)OH$, a group of formula $-CH(R^3)OR^8$, or a group of formula II, $R^6$ either represents a hydrogen atom, in which case $R^7$ represents the residue of a polyepoxide after removal of (m + p) 1,2-epoxide groups, or it represents a covalent bond linked to the group $R^7$, in which case $R^7$, together with the indicated hydroxyethylene group, forms a cycloaliphatic ring which is substituted by aliphatic, cycloaliphatic and/or heterocyclic groups, $R^8$ represents an alkyl group of 1 to 6 carbon atoms or an alkoxyalkyl group wherein the alkoxy group and the alkyl group each have from 1 to 6 carbon atoms, $R^9$ represents the residue of a monohydric phenol, a secondary monoamine, or a monocarboxylic acid after removal of the hydrogen atom of the phenolic hydroxyl group, the carboxylic acid group, or the secondary amino group, m represents 1, 2, 3, or 4, n represents zero or 1, p represents zero or 1, such that (m + p) is at least 2 and at most 4, X represents an alkylene or alkylidene group of 1 to 3 carbon atoms, a carbonyl or sulfonyl group, an oxygen or sulfur atom, or a valence bond, $M^+$ represents a hydrogen ion or a monovalent cation derived from an alkali metal, ammonia, or an amine, including quaternary ammonium cations, with the proviso that at least 25% of the ions $M^+$ are a said monovalent cation, the indicated phenolic hydroxyl group being ortho or para to the indicated group

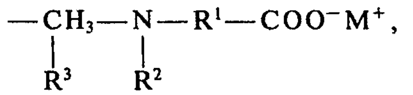

wherein $R^{10}$ denotes a hydrogen atom, a group $-COO^- M^+$, an alkyl group of 1 to 6 carbon atoms, a said alkyl group substituted by a further group $-COO^- M^+$, a said alkyl group substituted by a group of formula $-CH(R^3)OH$, or a said alkyl group substituted by a group of formula $-CH(R^3)OR^8$, which process comprises a Mannich reaction of a phenolterminated resin of formula

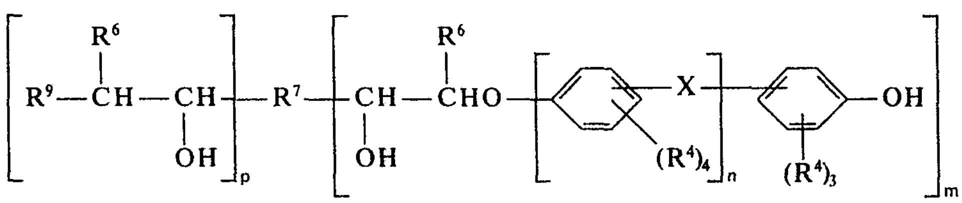 (VI)

wherein $R^4$, $R^6$, $R^7$, X, m, and n are as previously defined with the proviso that at least one of the two carbon atoms ortho, or the one carbon atom para, to the carbon atom bearing the indicated phenolic hydroxyl group is unsubstituted, in the presence of a source of $M^+$ ions with an aldehyde of formula

$$R^3CHO \qquad (VII)$$

and an aminoacid of formula

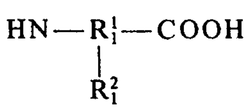 (VIII)

wherein $M^+$ is as defined in claim 1, $R^3$ is as defined in claim 1, $R_1^1$ represents an aliphatic, aromatic, or araliphatic divalent group of 1 to 10 carbon atoms which may contain a carboxylic acid (—COOH) substituent, and $R_1^2$ represents a hydrogen atom, a group of formula II, or an alkyl group of 1 to 6 carbon atoms which may be substituted by a carboxylic acid (—COOH) group or a group of formula $-CH(R^3)OH$ or $-CH(R^3)OR^8$, with the proviso that only one of $R_1^1$ and $R_1^2$ may contain the said carboxylic acid substituent, where $R^1$ has the meaning assigned and $R^3$, $R^8$, and $R^{10}$ are as previously defined.

2. A process according to claim 1, wherein the aminoacid is sarcosine, iminodiacetic acid, anthranilic acid, glycine, glutamic acid, aspartic acid, or p-aminobenzoic acid.

3. A process according to either claim 1 or claim 2, wherein the reactants are heated in the presence of sufficient of a base at least partially to neutralise the aminoacid, the base being sodium hydroxide, sodium carbonate, potassium hydroxide, potassium carbonate, ammonia, triethylamine, triethanolamine, 2-(dimethylamino)-2-methylpropan-1-ol, or 2-(diethylamino)ethanol.

4. A process according to any one of claims 1 to 3, wherein a resin of formula VI is used, in which $R^7$ is a polyepoxide radical having an average molecular weight of 1000 to 5000.

5. A process according to any one of claims 1 to 4 for the preparation of salts of the formulae

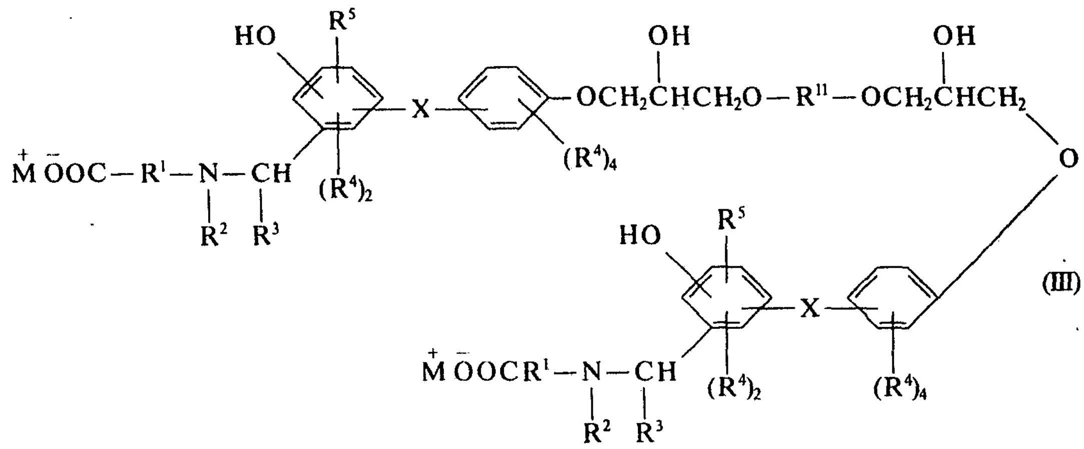

(III)

or

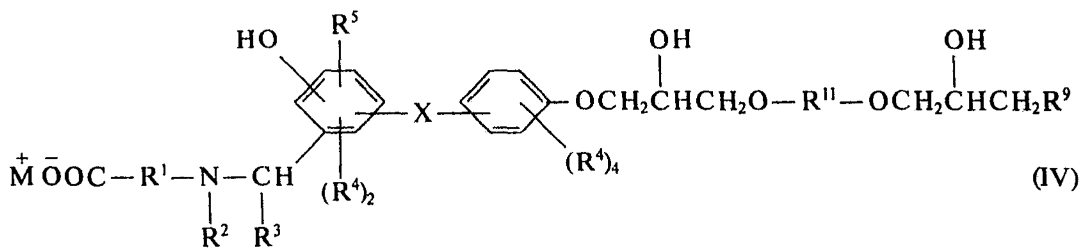

(IV)

wherein $R^1$, $R^2$, $R^3$, $R^4$, $R^5$, $R^9$, X and $M^+$ are as defined in claim 1 and $R^{11}$ represents the residue of an aliphatic, cycloaliphatic, or aromatic diglycidyl ether or ester after removal of both glycidyl groups.

6. A process according to any one of claims 1 to 5, wherein an amino acid of formula VIII is used, in which $R_1^2$ is a group of the formula II, where $R_1^1$ is an alkylene group of 1 to 4 carbon atoms or a phenylene group.

7. A process according to claim 5 for the preparation of salts of formula III or IV, wherein $R^{11}$ is a radical of the formula

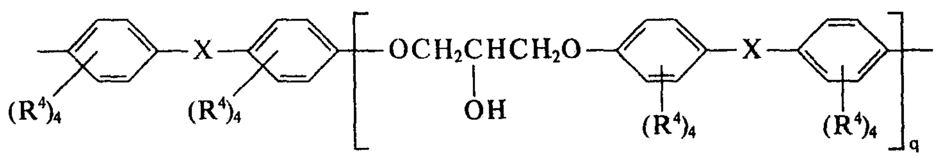

(V)

in which $R^4$ and X are as defined in claim 1 und q is zero or an integer from 1 to 20.

**Revendications pour les Etat contractants: BE, CH, DE, FR, GB, IT, LI, NL, SE**

1. Sels d'acides carboxyliques solubles dans l'eau ou pouvant être dispersés dans l'eau, de formule générale

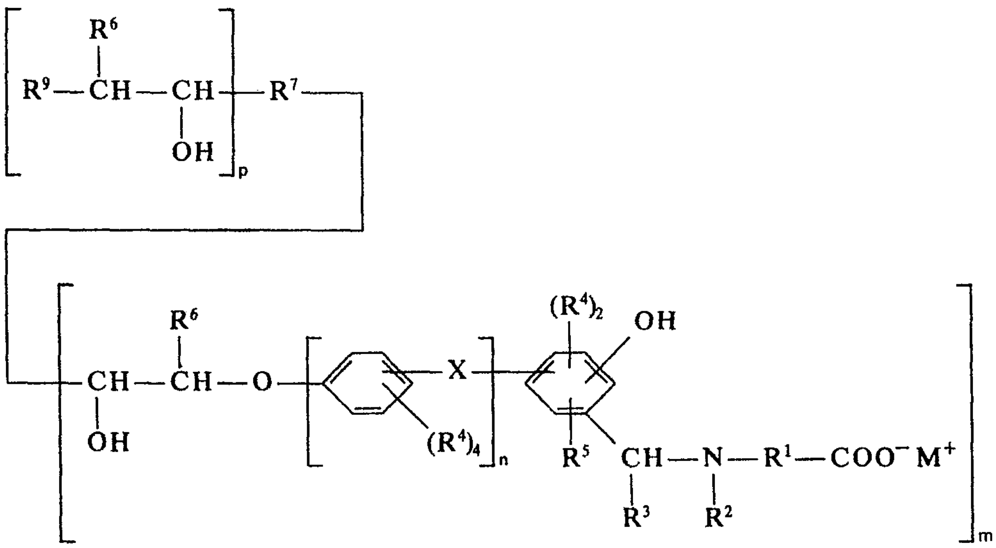

(I)

dans laquelle $R^1$ représente un groupe aliphatique, aromatique ou araliphatique divalent en $C^1$ à $C^{10}$, pouvant éventuellement porter un autre groupe $-COO^-M^+$, $R^2$ représente un atome d'hydrogène ou un groupe de formule:

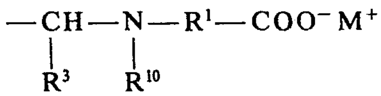

(II)

ou bien un groupe alkyle en $C^1$ à $C^6$ éventuellement substitué par un autre groupe $-COO^-M^+$ ou par un groupe $-CH(R^3)OH$ ou $-CH(R^3)OR^8$, avec la condition que $R^1$ et $R^2$ ne comportent pas ensemble plus d'un groupe $-COO^-M^+$, $R^3$ représente un atome d'hydrogène ou un alkyle en $C^1$ à $C^4$, les divers $R^4$, qui peuvent être identiques ou différents les uns des autres, représentent chacun un atome d'hydrogène ou d'halogène un alkyle en $C^1-C^4$ ou un alcényle en $C^2$ à $C^4$, $R^5$ occupe la position ortho ou para par rapport à l'hydroxyle phénolique indiqué et représente un atome d'hydrogène ou d'halogène, un alkyle en $C^1$ à $C^4$, un alcényle en $C^2$ à $C^4$, un groupe $-CH(R^3)OH$ ou $-CH(R^3)OR^8$ ou encore un groupe de formule II ci-dessus, $R^6$ représente soit un atome d'hydrogène, auquel cas $R^7$ est le reste d'un polyépoxyde résultant de l'élimination de (m + p) groupes 1,2-époxy, soit une liaison covalente au groupe $R^7$, ce dernier formant alors, avec le groupe hydroxyéthylène indiqué, un système cycloaliphatique éventuellement substitué par des groupes aliphatiques, cycloaliphatiques et/ou hétérocyclique, $R^8$ représente un alkyle en $C^1$ à $C^6$ ou un alcoxyalkyle en $C^1$ à $C^6$ aussi bien dans la partie alcoxy que dans la partie alkyle, $R^9$ le reste d'un monophénol, d'une monoamine secondaire ou d'un acide monocarboxylique résultant de l'élimination d'un atome d'hydrogène de l'hydroxyle phénolique, du groupe carboxylique ou du groupe amino secondaire, m est le nombre 1, 2, 3 ou 4, n et p sont chacun le nombre 0 ou 1, la somme (m + p) étant au moins égale à 2 et au plus à 4, X représente un groupe alkylène ou alkylidène en $C^1$ à $C^3$, un groupe carbonyle ou sulfonyle, un atome d'oxygène ou de soufre ou encore une liaison de valence, et $M^+$ un ion hydrogène ou un cation monovalent provenant d'un métal alcalin, de l'ammoniac ou d'une amine, y compris des cations ammoniums quarternaires, avec la condition qu'au moins 25% des ions $M^+$ soient à de tels cations monovalents, l'hydroxyle phénolique indiqué occupant la position ortho ou para par rapport au groupe

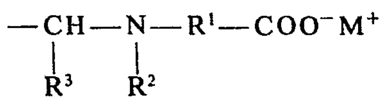

et $R^{10}$ désignant un atome d'hydrogène, un groupe $-COO^-M^+$ ou un alkyle en $C^1$ à $C^6$ éventuellement substitué par un autre groupe $-COO^-M^+$ ou par un groupe $-CH(R^3)OH$ ou $-CH(R^3)OR^8$.

2. Sels selon la revendication 1 dans lesquels $R^7$ est un radical d'un polyépoxyde ayant une masse moléculaire moyenne de 1000 à 5000.

3. Sels selon la revendication 1 ou 2 qui ont la formule

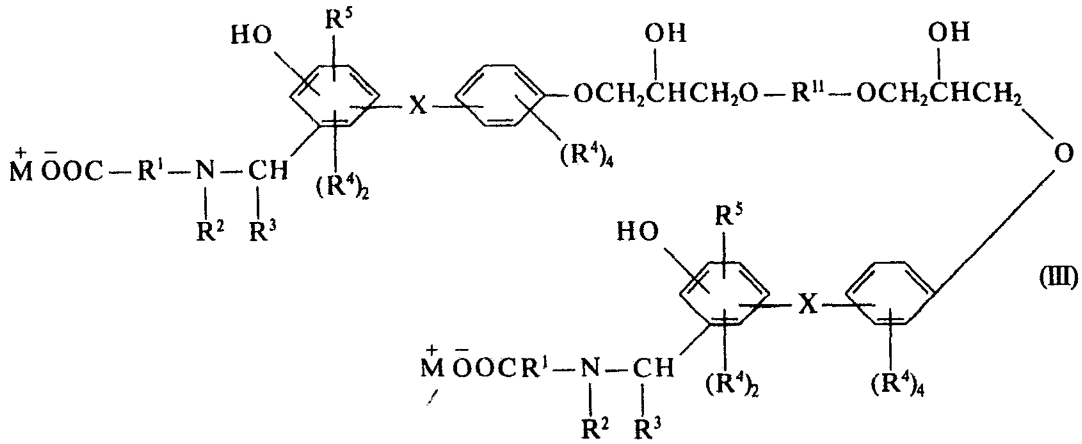

(III)

ou

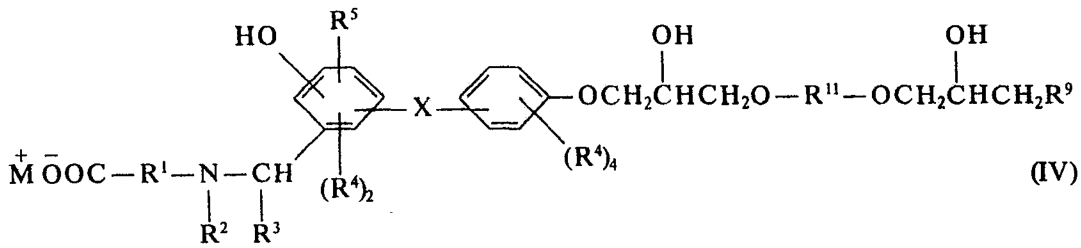

(IV)

$R^{11}$ désignant le reste d'un éther ou d'un ester diglycidylique aliphatique, cycloaliphatique ou aromatique résultant de l'élimination des deux groupes glycidyliques.

4. Sels selon l'une quelconque des revendications 1 à 3 dans lesquels $R^1$ est un groupe alkylène en $C_1$ à $C_4$ ou un groupe phénylène.

5. Sels selon la revendication 3 ou 4 dans lesquels $R^{11}$ est un radical de formule

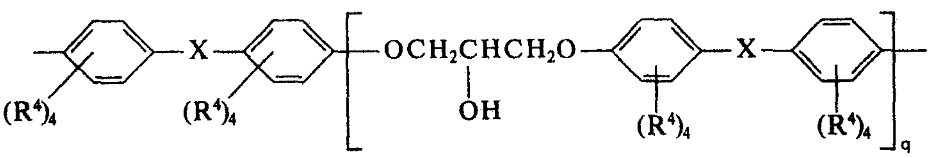

(V)

q étant un entier de 0 à 20.

6. Procédé de préparation de sels selon l'une quelconque des revendications précédentes, caractérisé par une réaction de Mannich d'une résine à groupes terminaux phénoliques de formule

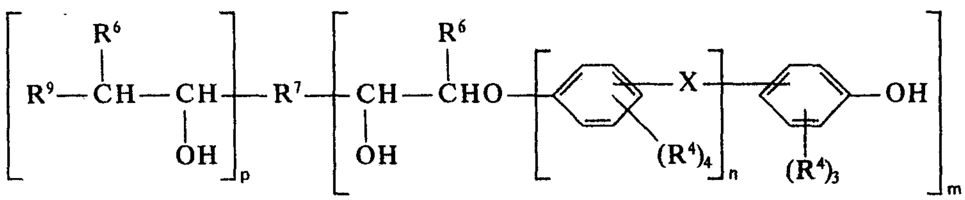

(VI)

(avec la condition qu'au moins l'un des deux atomes de carbone aux positions ortho par rapport à l'hydroxyle phénolique indiqué, ou que l'atome de carbone à la position para par rapport à l'hydroxyle phénolique, n'aient pas de substituant), en présence d'une source d'ions $M^+$, avec un aldéhyde de formule

$R^3CHO$ (VII)

et un acide aminé de formule

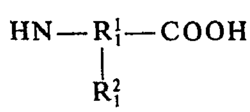

(VIII)

$R_1^1$ représentant un groupe divalent en $C_1$ à $C_{10}$, aliphatique, aromatique ou araliphatique, pouvant éventuellement avoir un substituant carboxylique (—COOH), et $R_1^2$ un atome d'hydrogène, un groupe de formule II ou un alkyle en $C_1$ à $C_6$ éventuellement substitué par un groupe carboxylique (—COOH) ou

par un groupe $-CH(R^3)OH$ ou $-CH(R^3)OR^8$, avec la condition que parmi $R_1^1$ et $R_1^2$ un seul puisse avoir un substituant carboxylique, $R^1$ ayant la signification donnée à la revendication 1 ou 4 et $R^3$, $R^8$ et $R^{10}$ les significations données à la revendication 1.

7. Procédé selon la revendication 6 caractérisé en ce que l'acide aminé est la sarcosine, l'acide iminodiacétique, l'acide anthranilique, le glycocolle, l'acide glutamique, l'acide aspartique, ou l'acide p-amino-benzoïque.

8. Procédé selon la revendication 6 ou 7 caractérisé en ce que l'on chauffe les réactifs en présence d'une quantité de base suffisante pour neutraliser au moins partiellement l'amino-acide, base qui est l'hydroxyde ou le carbonate de sodium ou de potassium, l'ammoniac, la triéthylamine, la triéthanolamine, le 2-(diméthylamino)-2-méthyl-1-propanol ou le 2-(diméthylamino)-éthanol.

9. Compositions durcissables caractérisées en ce qu'elles comprennent 100 parties en poids d'un sel d'acide carboxylique selon l'une quelconque des revendications 1 à 5, en matière solide, avec 2 à 200 parties en poids, également en matière solide, d'un aminoplaste, d'une résine phénol-formaldéhyde ou d'un polyisocyanate masqué, l'aminoplaste et la résine phénol-formaldéhyde ayant au moins deux groupes de formule

$$CH_2OR^{12} \qquad (XI)$$

directement liés à un ou plusieurs atomes d'azote de groupe amide ou directement liés à des atomes de carbone d'un cycle phénolique, $R^{12}$ dans la formule XI, désignant un atome d'hydrogène ou un alkyle en $C_1$ à $C_6$, la teneur en matière solide étant la proportion % de matière qui reste après un chauffage de 3 heures d'un échantillon de 1 g à 120°C à la pression atmosphérique dans une capsule ouverte de 5 cm de diamètre.

10. Procédé de revêtement de surfaces caractérisé en ce que l'on applique sur la surface à enduire une composition selon la revendication 9 ou bien, sans aminoplaste ni résine phénol-formaldéhyde ni polyisocyanate masqué, un sel de formule I tel que défini à l'une quelconque des revendications 1 à 5 et dans lequel $R^5$ est un groupe $-CH(R^3)OH$, et on chauffe la surface enduite entre 100 et 275°C.

11. L'utilisation d'une composition selon la revendication 9 pour la revêtement de surfaces.

**Revendications pour l'Etat contractant: AT**

1. Procédé de préparation de sels d'acides carboxyliques solubles dans l'eau ou pouvant être dispersés de l'eau, de formule générale

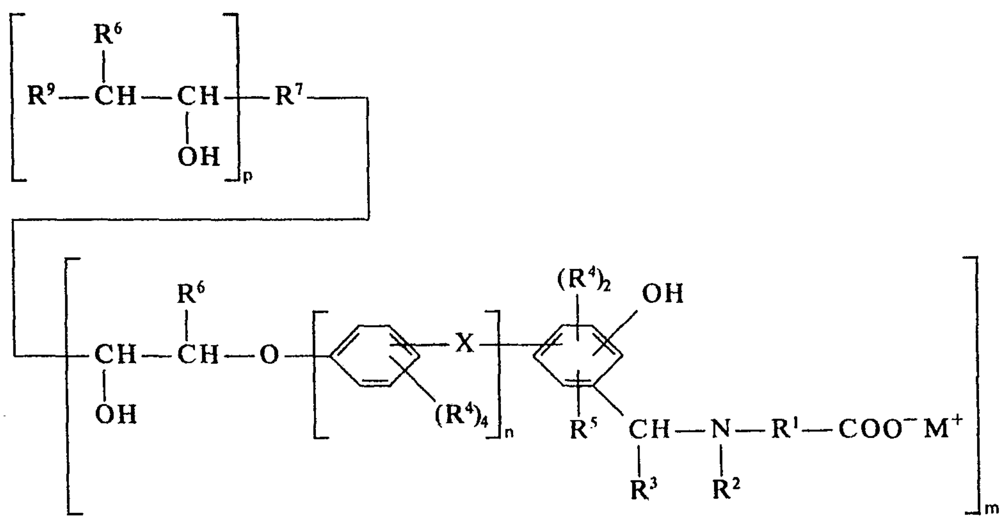

(I)

(dans laquelle $R^1$ représente un groupe aliphatique, aromatique ou araliphatique divalent en $C^1$ à $C^{10}$, pouvant éventuellement porter un autre groupe $-COO^- M^+$, $R^2$ représente un atome d'hydrogène ou un groupe de formule:

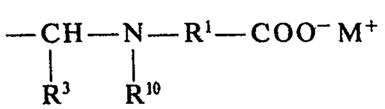

(II)

ou bien un groupe alkyle en $C^1$ à $C^6$ éventuellement substitué par un autre groupe $-COO^- M^+$ ou par un groupe $-CH(R^3)OH$ ou $-CH(R^3)OR^8$, avec la condition que $R^1$ et $R^2$ ne comportent pas ensemble plus d'un groupe $-COO^- M^+$, $R^3$ représente un atome d'hydrogène ou un alkyle en $C^1$ à $C^4$, les divers $R^4$,

qui peuvent être identiques ou différents les uns des autres, représentent chacun un atome d'hydrogène ou d'halogène un alkyle en $C^1-C^4$ ou un alcényle en $C^2$ à $C^4$, $R^5$ occupe la position ortho ou para par rapport à l'hydroxyle phénolique indiqué et représente un atome d'hydrogène ou d'halogène, un alkyle en $C^1$ à $C^4$, un alcényle en $C^2$ à $C^4$, un groupe $-CH(R^3)OH$ ou $-CH(R^3)OR^8$ ou encore un groupe de formule II ci-dessus, $R^6$ représente soit un atome d'hydrogène, auquel cas $R^7$ est le reste d'un polyépoxyde après l'élimination de (m + p) groupes 1,2-époxy, soit une liaison covalente au groupe $R^7$, ce dernier formant alors, avec le groupe hydroxyéthylène indiqué, un système cycloaliphatique éventuellement substitué par des groupes aliphatiques, cycloaliphatiques et/ou hétérocyclique, $R^8$ représente un alkyle en $C^1$ à $C^6$ ou un alcoxyalkyle en $C^1$ à $C^6$ aussi bien dans la partie alcoxy que dans la partie alkyle, $R^9$ le reste d'un monophénol, d'une monoamine secondaire ou d'un acide monocarboxylique après élimination d'un atome d'hydrogène de l'hydroxyle phénolique, du groupe carboxylique ou du groupe amino secondaire, m est le nombre 1, 2, 3 ou 4, n et p sont chacun le nombre 0 ou 1, la somme (m + p) étant au moins égale à 2 et au plus à 4, X représente un groupe alkylène ou alkylidène en $C^1$ à $C^3$, un groupe carbonyle ou sulfonyle, un atome d'oxygène ou de soufre ou encore une liaison de valence, et $M^+$ un ion hydrogène ou un cation monovalent provenant d'un métal alcalin, de l'ammoniac ou d'une amine, y compris des cations ammoniums quarternaires, avec la condition qu'au moins 25% des ions $M^+$ soient de tels cations monovalents, l'hydroxyle phénolique indiqué occupant la position ortho ou para par rapport au groupe

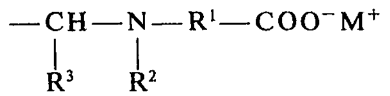

et $R^{10}$ désignant un atome d'hydrogène, un groupe $-COO^-M^+$ ou un alkyle en $C^1$ à $C^6$ éventuellement substitué par un autre groupe $-COO^-M^+$ ou par un groupe $-CH(R^3)OH$ ou $-CH(R^3)OR^8$, procédé caractérisé par une réaction de Mannich d'une résine à groupes terminaux phénoliques de formule

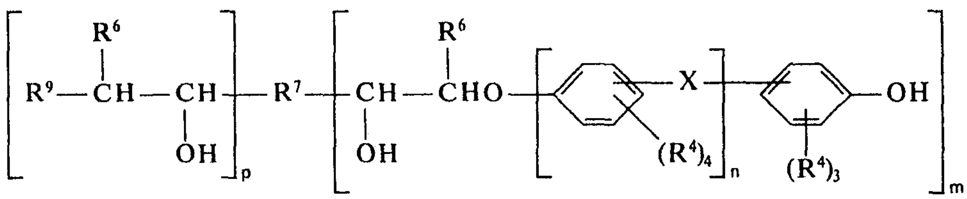 (VI)

(avec la condition qu'au moins l'un des deux atomes de carbone aux positions ortho par rapport à l'hydroxyle phénolique indiqué, ou que l'atome de carbone à la position para par rapport à l'hydroxyle phénolique, n'aient pas de substituant), en présence d'une source d'ions $M^+$, avec un aldéhyde de formule

$$R^3CHO \quad \text{(VII)}$$

et au acide aminé de formule

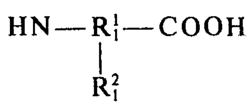 (VIII)

$R_1^1$ représentant un groupe divalent en $C_1$ à $C_{10}$, aliphatique, aromatique ou araliphatique, pouvant éventuellement avoir un substituant carboxylique (—COOH), et $R_1^2$ un atome d'hydrogène, un groupe de formule II ou un alkyle en $C_1$ à $C_6$ éventuellement substitué par un groupe carboxylique (—COOH) ou par un groupe $-CH(R^3)OH$ ou $-CH(R^3)OR^8$, avec la condition que parmi $R_1^1$ et $R_1^2$ un seul puisse avoir un substituant carboxylique, les symboles $R^1$, $R^3$, $R^8$ et $R^{10}$ ayant les significations précédemment données.

2. Procédé selon la revendication 1, caractérisé en ce que l'acide aminé est la sarcosine, l'acide iminodiacétique, l'acide anthranilique, le glycocolle, l'acide glutamique, l'acide aspartique ou l'acide p-amino-benzoïque.

3. Procédé selon la revendication 1 ou 2, caractérisé en ce que l'on chauffe les réactifs en présence d'une quantité de base suffisante pour neutraliser au moins partiellement l'amino-acide, base qui est l'hydroxyde ou le carbonate de sodium ou de potassium, l'ammoniac, la triéthylamine, la triéthanolamine, le 2-(diméthylamino)-2-méthyl-1-propanol ou le 2-(diméthylamino)-2-éthanol.

4. Procédé selon l'une quelconque des revendications 1 à 3 caractérisé en ce que l'on utilise une résine de formule VI dans laquelle $R^7$ est un radical de polyépoxyde ayant une masse moléculaire moyenne de 1000 à 5000.

5. Procédé selon l'une quelconque des revendications 1 à 4 pour la préparation de sels de formule

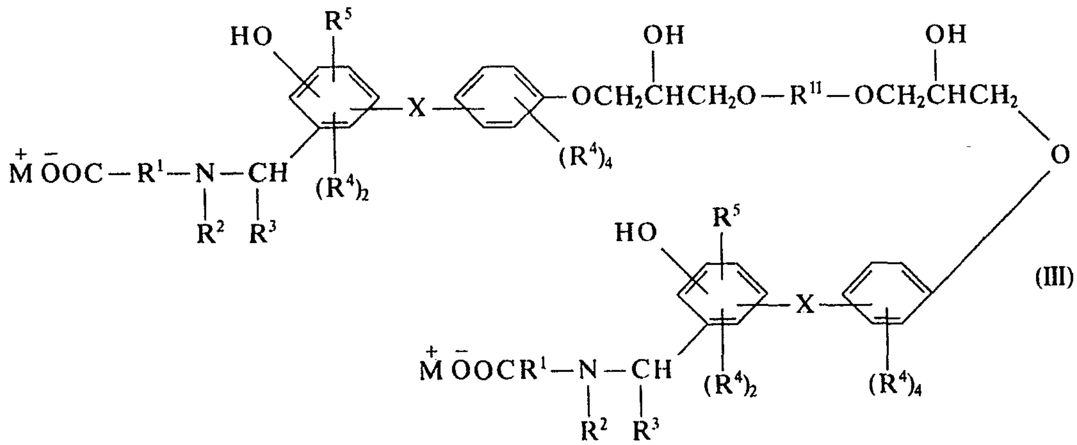

(III)

ou

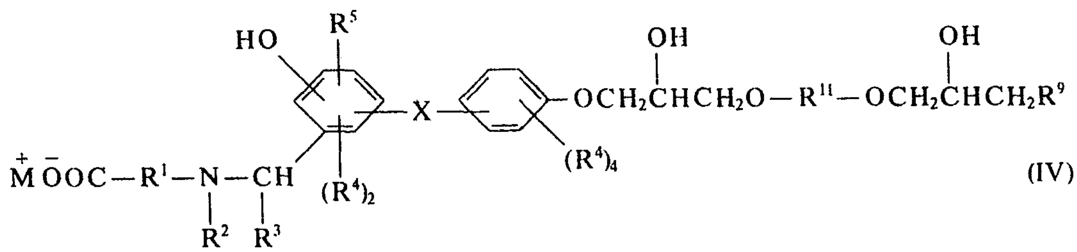

(IV)

$R^{11}$ désignant le reste d'un éther ou d'un ester diglycidylique, aliphatique, cycloaliphatique ou aromatique, résultant de l'élimination des deux groupes glycidyliques.

6. Procédé selon l'une quelconque des revendications 1 à 5 caractérisé en ce qu'on utilise un acide aminé de formule VIII dans lequel $R_1^2$ est un groupe de formule II et $R_1^1$ est un alkylène en $C_1$—$C_4$ ou un groupe phénylène.

7. Procédé selon la revendication 5 pour la préparation de sels de formule III ou IV dans lesquels $R^{11}$ est un radical de formule

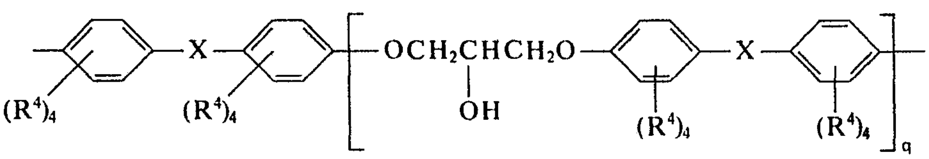

(V)

$R^4$ et X ayant les significations données à la revendication 1 et q étant un entier de 0 à 20.